# EUROPEAN PATENT APPLICATION

(11) **EP 3 061 349 A1**
(43) Date of publication of application: **31.08.2016**
(21) Application number: 13803085.3
(22) Date of filing: 23.10.2013
(51) Int. Cl.: A01N 65/00, A01N 65/20, A01P 21/00, A01P 3/00, C05G 3/02

(54) **PLANT PROTECTION PRODUCT FOR THE CONTROL OF FUNGI AND OOMYCETES**

(71) Applicant: Servalesa, S.L., 46520 Puerto Sagunto (Valencia) (ES)
(72) Inventor: JUANES PERIS, Jose, Helenio, E-46520 Puerto Sagunto (Valencia) (ES); JUANES PERIS, Luis, E-46520 Puerto Sagunto (Valencia) (ES); RAMOS RUIZ, Roberto, E-46520 Puerto Sagunto (Valencia) (ES)
(74) Representative: Herrero & Asociados, S.L.
(86) International application number: PCT/ES2013/070736
(87) International publication number: WO 2015/059318

(57) **Abstract**

The invention defines a composition for agricultural use comprising an active ingredient consisting of a quebracho extract, a mimosa extract or a combination thereof. Likewise, the invention defines a method for preparing said composition and a method for applying same. This composition is effective against oomycetes and fungi in plants fit to be cultivated, its mechanism of action being indirect since the treated plants develop a mechanism complementing the resistance to said pathogens, so it can also be used in a preventive manner. The composition of the invention is also effective for controlling or preventing problems caused by abiotic stress in plants (water stress, cold weather, hot weather, etc.), while at the same time successfully increasing plant vigor and health.

## Description

### Field of the Invention

The invention relates to the field of products for agricultural use. Particularly, the invention relates to a product which is effective against oomycetes and fungi, especially in plants fit to be cultivated. Said natural extract-based product acts as a chemical barrier against diseases. In addition to being effective against biotic stress, it is also effective against abiotic stress and at the same time promotes a general enhancement in crop vegetation and health.

### Background of the Invention

One of the main problems faced by the agrochemical industry is the search for active substances against oomycete type pathogens, which were previously considered as fungi, causing extremely widespread plant diseases such as mildew, as well as fungal pathologies such as oidium or rust, for example, and causing serious damage and great economic losses.

Today there are many chemical alternatives to fight these pathogens, each of them with different characteristics and mode of action.

Copper-based products, for example, the mode of action of which is by contact, have thus been used. However, said products are toxicologically complicated due to their own pollutant and toxic capacity per se, in addition to being rather residual.

On the other hand, phenylamide-based products have been used; said products are sensitive to the occurrence of resistances, so they have very limited uses in the sector today.

Likewise, products with strobilurins as an active ingredient have been used; said products also causing the risk of resistances due to their mechanism of action, so the instructions of use thereof tend to be overly strict.

Similarly, the use of triazoles considerably increases the risk of the occurrence of resistances, whereas the use of sulfur-based fungicides, in addition to being unpleasant for the person applying them, has a high probability of the occurrence of phytotoxicity symptoms in specific environmental conditions.

All these conventional fungicides are chemically synthesized products directly controlling pathogens and are specific for each disease. Therefore, there is a need in the state of the art to search for effective alternative products that cause less damage to the environment and produce a lower level of residues in crops.

The present authors propose a natural quebracho and/or mimosa extract-based alternative product which is effective against oomycetes causing diseases such as mildew in plants fit to be cultivated, and against fungi causing diseases such as oidium or rust in plants fit to be cultivated. Its mechanism of action is indirect since the treated plants develop a mechanism of resistance to said pathogens, so it can also be used in a preventive manner. The product of the invention is also effective for controlling or preventing problems caused by abiotic stress in plants (water stress, cold weather, hot weather, etc.), while at the same time successfully increasing plant vigor and health.

Quebracho extract comes from the duramen of the quebracho tree which grows in South America and is marketed in different solid, atomized powder and wet formats for different applications depending on its solubility. The hot extract, also known as insoluble extract, obtained directly from quebracho wood is used in small doses in processes for enhancing hide impermeability. The semi-soluble extract, subjected to partial sulfiting, is used for tanning dewooled skins, which skins require brushing or retanning the hide. Likewise, the cold soluble extract is generally used by means of a sulfiting method as a rather astringent tanning material.

Mimosa extract in turn comes from the root of the mimosa tree (which usually grows in Brazil and Mexico), and it is attributed properties such as scalp strengthening, skin rejuvenation, as well as beneficial effects on wounds, burns and even hide tanning.

A laboratory study on the activity of 70 plant species as possible fungistatic agents against the fungus *Botrytis cinerea* ("Búsqueda de especies vegetales para el control de Botrytis cinerea" Torres Sanhueza) was published in 2007. However, said document indicated that a solution of mimosa powder in potato dextrose agar (PDA) had no fungicidal effect, even at high concentrations, and in terms of its fungistatic effect the document mentioned that in order to control 90% of this fungus, an amount which cannot be implemented in practice, i.e., for field application, would be needed. On the other hand, it mentioned that this solution did not show inhibition of fungal sporulation but rather, in contrast, increased the number of conidia depending on the concentration, and therefore greater plant infestation was expected.

Nevertheless, the present authors have discovered that mimosa extract, like quebracho extract, either alone or in combination, have a protective effect against oidium, rust and mildew at low concentrations so they can be applied in the field for preventing or mitigating attacks of these oomycetes and fungi on plants fit to be cultivated.

### Object of the Invention

Therefore, the object of the present invention is to provide a composition for agricultural use comprising a quebracho extract, a mimosa extract or a combination thereof as active ingredients.

Another object of the present invention is to provide a method for the preparation of said composition.

Likewise, another object of the present invention is to provide a method for inducing a response to biotic stress in plants fit to be cultivated and/or for inducing a response to abiotic stress, which comprises applying said composition to plants fit to be cultivated.

### Description of the Drawings

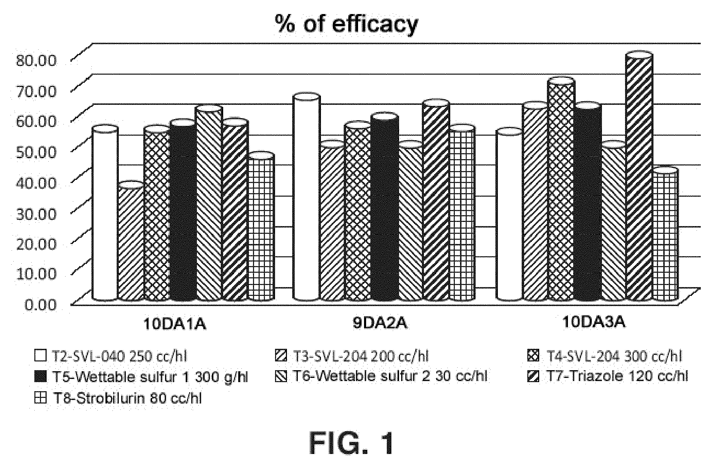

Figure 1 shows the efficacy with respect to the control in terms of the mean percentage of leaf area affected by *Sphaerotheca fuliginea* per plot in cucumber plants subjected to treatment with soluble sulfur (T2), with a composition of quebracho extract and mimosa extract of the invention at a dose of 200 ml/100 I (T3) and at a dose of 300 ml/100 l (T4), with wettable sulfur (T5 and T6), with triazole (T7) and with strobilurin (T8).

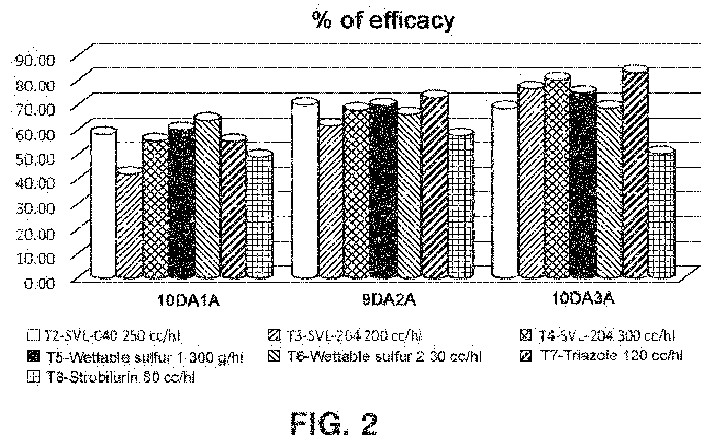

Figure 2 shows the efficacy with respect to the control in terms of the mean percentage of leaf area affected by *Sphaerotheca fuliginea* per leaf in 25 leaves per plot in cucumber plants subjected to treatment with soluble sulfur (T2), with a composition of quebracho extract and mimosa extract of the invention at a dose of 200 ml/100 I (T3) and at a dose of 300 ml/100 I (T4), with wettable sulfur (T5 and T6), with triazole (T7) and with strobilurin (T8).

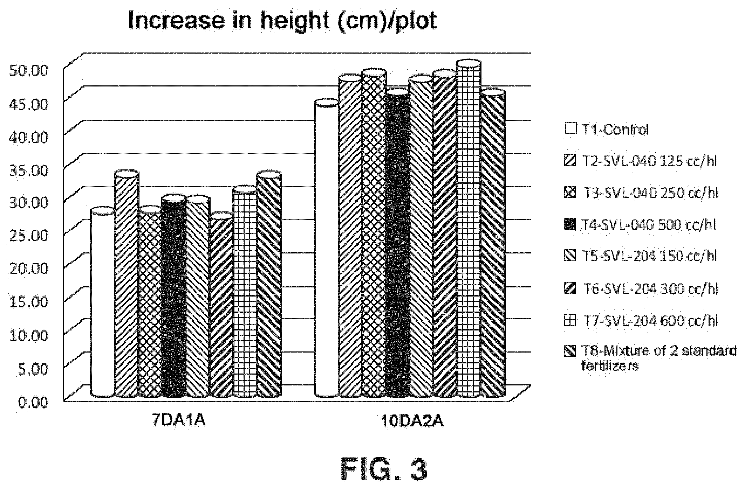

Figure 3 shows the increase in height (cm) per plot in untreated tomato plants (T1) and in tomato plants subjected to treatment with soluble sulfur at a dose of 125 ml/100 I (T2), of 250 ml/100 I (T3) and of 500 ml/100 I (T4), with a composition of quebracho extract and mimosa extract of the invention at a dose of 150 ml/100 I (T5), a dose of 300 ml/100 I (T6), and a dose of 600 ml/100 I (T7), and with a mixture of 2 standard plant strengtheners (T8).

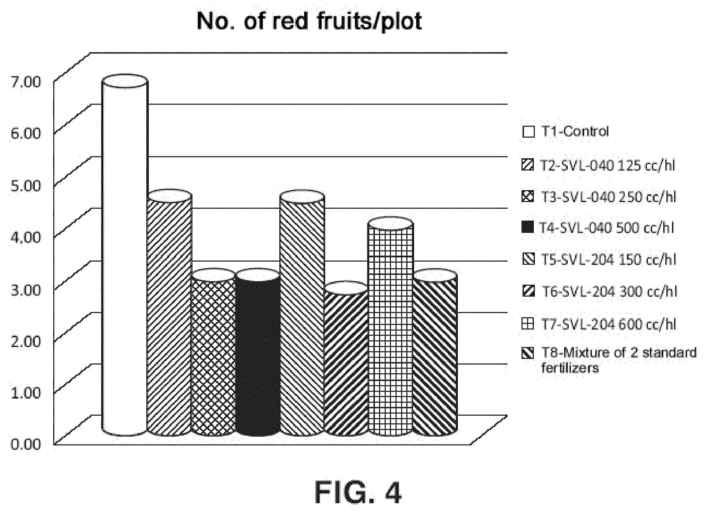

Figure 4 shows the mean number of red fruits per plot in 10 tomato plants per plot, in untreated tomato plants (T1) and in tomato plants subjected to treatment with soluble sulfur at a dose of 125 ml/100 I (T2), of 250 ml/100 I (T3) and of 500 ml/100 l (T4), with a composition of quebracho extract and mimosa extract of the invention at a dose of 150 ml/100 l (T5), a dose of 300 ml/100 l (T6), and a dose of 600 ml/100 l (T7), and with a mixture of 2 standard plant strengtheners (T8).

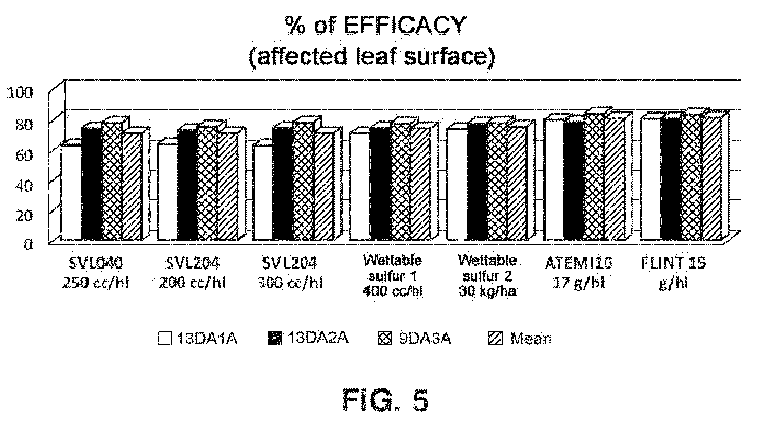

Figure 5 shows the efficacy with respect to the control in terms of the mean percentage of leaf area affected by *Sphaerotheca pannosa* per plot in peach tree plants subjected to treatment with soluble sulfur at a dose of 125 ml/100 l (T2), of 250 ml/100 l (T3) and of 500 ml/100 l (T4), with a composition of quebracho extract and mimosa extract of the invention at a dose of 150 ml/100 l (T5), a dose of 300 ml/100 l (T6), and a dose of 600 ml/100 l (T7), and with a mixture of 2 standard plant strengtheners (T8).

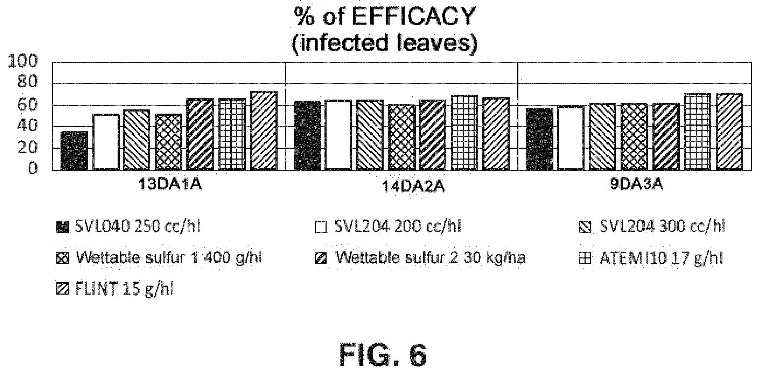

Figure 6 shows the efficacy with respect to the control in terms of the mean percentage of leaves infected by *Sphaerotheca pannosa* per plot in peach tree plants subjected to treatment with soluble sulfur at a dose of 125 ml/100 I (T2), of 250 ml/100 I (T3) and of 500 ml/100 I (T4), with a composition of quebracho extract and mimosa extract of the invention at a dose of 150 ml/100 I (T5), a dose of 300 ml/100 I (T6), and a dose of 600 ml/100 I (T7), and with a mixture of 2 standard plant strengtheners (T8).

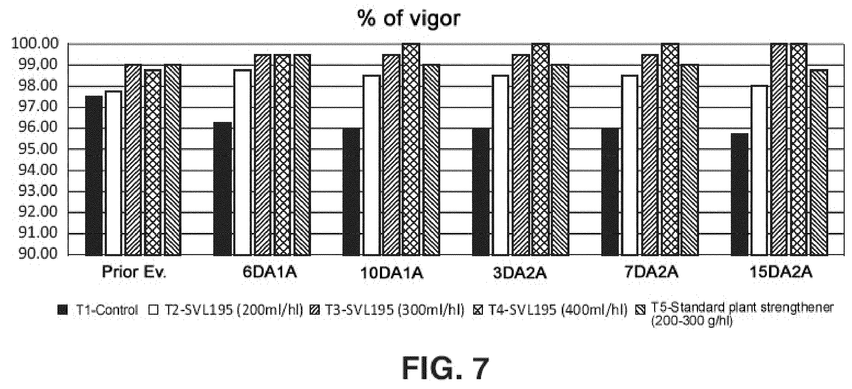

Figure 7 shows the mean percentages of vigor per plot in untreated onion plants (T1) and onion plants subjected to treatment with a composition of quebracho extract, mimosa extract and potassium sorbate of the invention at a dose of 200 ml/100 I (T2), a dose of 300 ml/100 I (T3), and a dose of 400 ml/100 I (T4), and with a standard plant strengthener (T5).

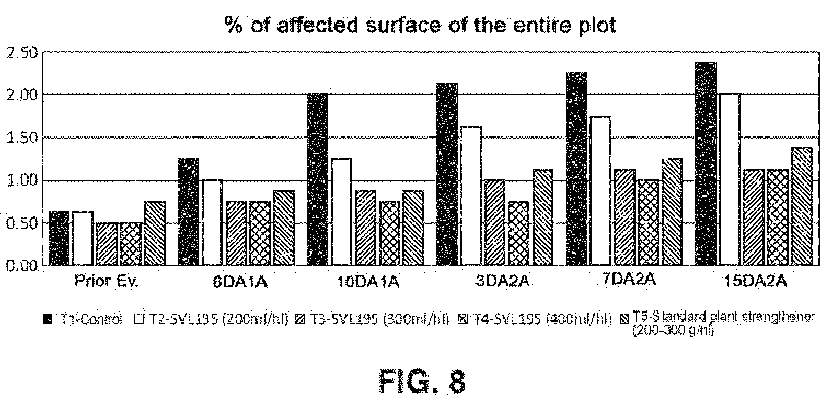

Figure 8 shows the mean percentages of leaf surface of the entire plot affected by *Peronospora destructor* in untreated onion plants (T1) and onion plants subjected to treatment with a composition of quebracho extract, mimosa extract and potassium sorbate of the invention at a dose of 200 ml/100 I (T2), a dose of 300 ml/100 I (T3), and a dose of 400 ml/100 I (T4), and with a standard plant strengthener (T5).

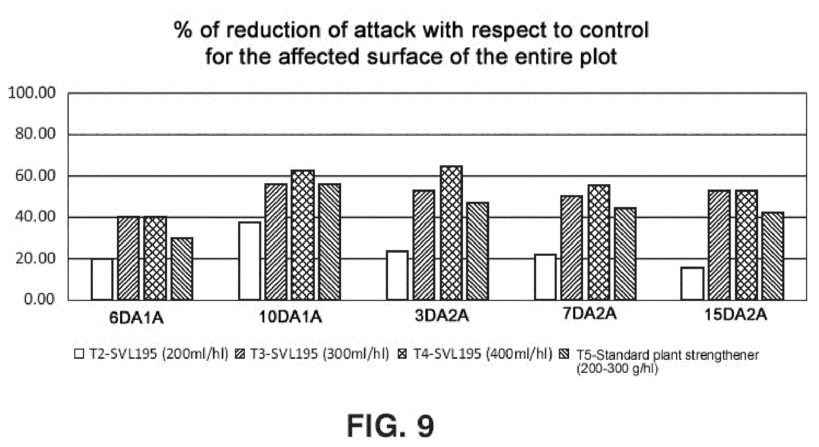

Figure 9 shows the efficacy with respect to the control in terms of the reduction of the surface of the entire plot affected by *Peronospora destructor* in onion plants subjected to treatment with a composition of quebracho extract, mimosa extract and potassium sorbate of the invention at a dose of 200 ml/100 I (T2), a dose of 300 ml/100 I (T3), and a dose of 400 ml/100 I (T4), and with a standard plant strengthener (T5).

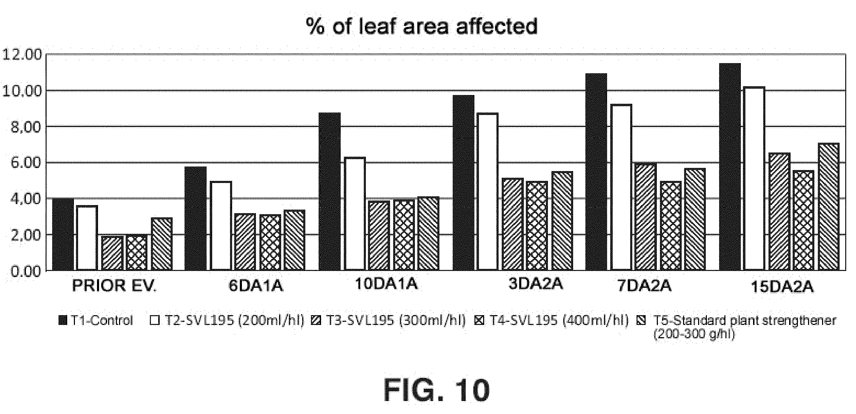

Figure 10 shows the mean percentage of leaf area attacked by *Peronospora destructor* in 25 leaves of each plot in untreated onion plants (T1) and onion plants subjected to treatment with a composition of quebracho extract, mimosa extract and potassium sorbate of the invention at a dose of 200 ml/100 I (T2), a dose of 300 ml/100 l (T3), and a dose of 400 ml/100 l (T4), and with a standard plant strengthener (T5).

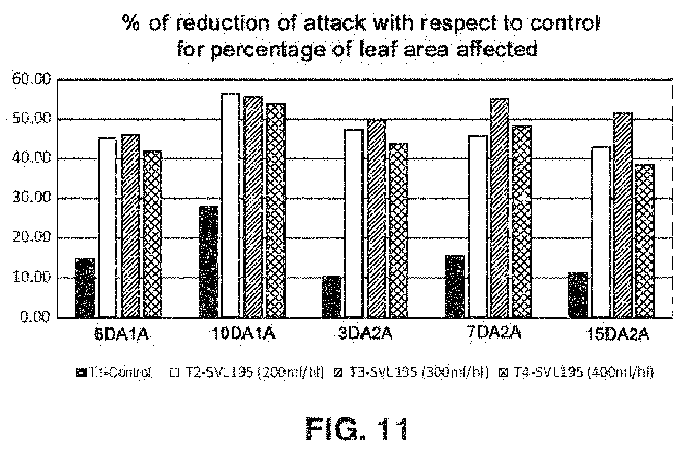

Figure 11 shows the efficacy with respect to the control in terms of the reduction of the leaf surface attacked by *Peronospora destructor* in 25 leaves of each plot in onion plants subjected to treatment with a composition of quebracho extract, mimosa extract and potassium sorbate of the invention at a dose of 200 ml/100 l (T2), a dose of 300 ml/100 l (T3), and a dose of 400 ml/100 l (T4), and with a standard plant strengthener (T5).

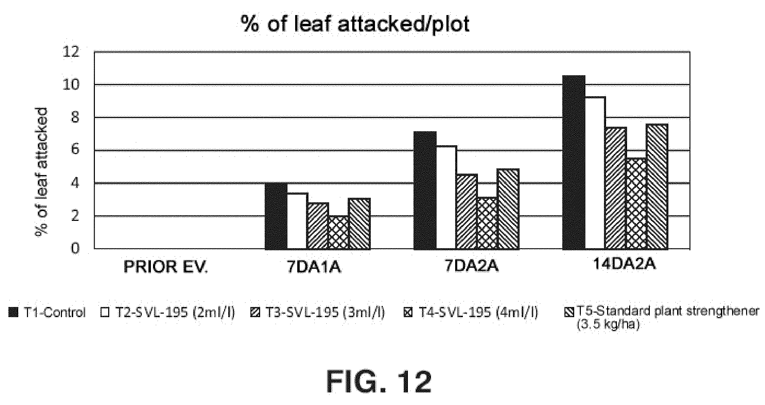

Figure 12 shows the mean percentage of leaves attacked by *Phytophthora cactorum* per plot in untreated strawberry plants (T1) and strawberry plants subjected to treatment with a composition of quebracho extract, mimosa extract and potassium sorbate of the invention at a dose of 200 ml/100 l (T2), a dose of 300 ml/100 l (T3), and a dose of 400 ml/100 l (T4), and with a standard plant strengthener (T5).

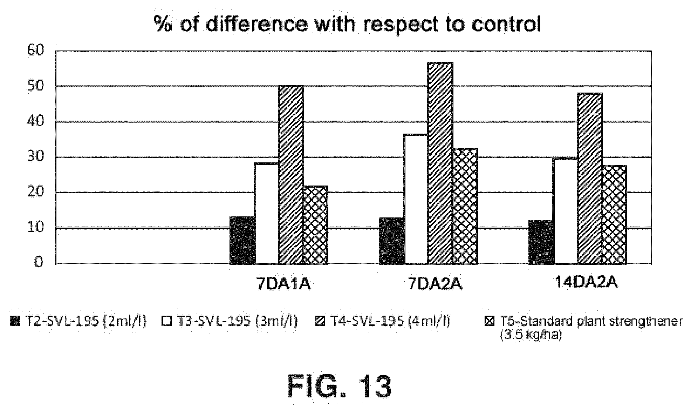

Figure 13 shows the efficacy with respect to the control in terms of the reduction of the mean percentage of leaves attacked by *Phytophthora cactorum* per plot in strawberry plants subjected to treatment with a composition of quebracho extract, mimosa extract and potassium sorbate of the invention at a dose of 200 ml/100 l (T2), a dose of 300 ml/100 l (T3), and a dose of 400 ml/100 I (T4), and with a standard plant strengthener (T5).

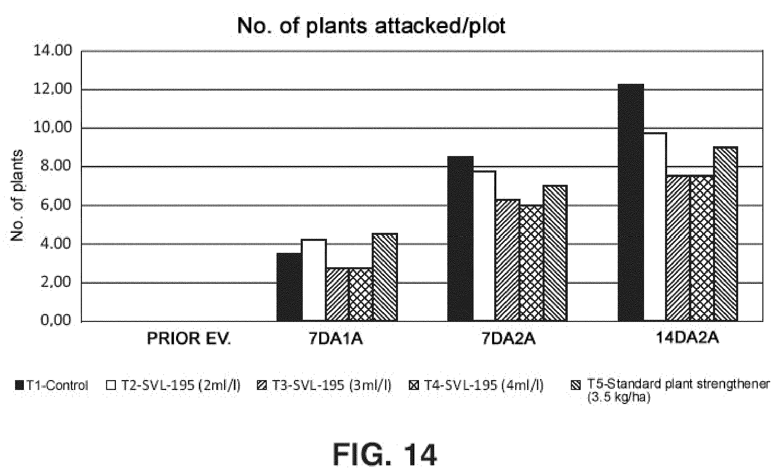

Figure 14 shows the number of plants attacked by *Phytophthora cactorum* per plot in untreated strawberry plants (T1) and strawberry plants subjected to treatment with a composition of quebracho extract, mimosa extract and potassium sorbate of the invention at a dose of 200 ml/100 l (T2), a dose of 300 ml/100 l (T3), and a dose of 400 ml/100 l (T4), and with a standard plant strengthener (T5).

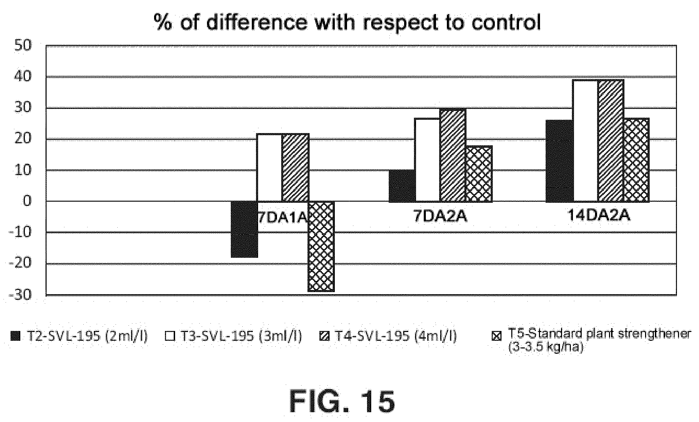

Figure 15 shows the efficacy with respect to the control in terms of the reduction of the number of plants attacked by *Phytophthora cactorum* per plot in strawberry plants subjected to treatment with a composition of quebracho extract, mimosa extract and potassium sorbate of the invention at a dose of 200 ml/100 I (T2), a dose of 300 ml/100 l (T3), and a dose of 400 ml/100 l (T4), and with a standard plant strengthener (T5).

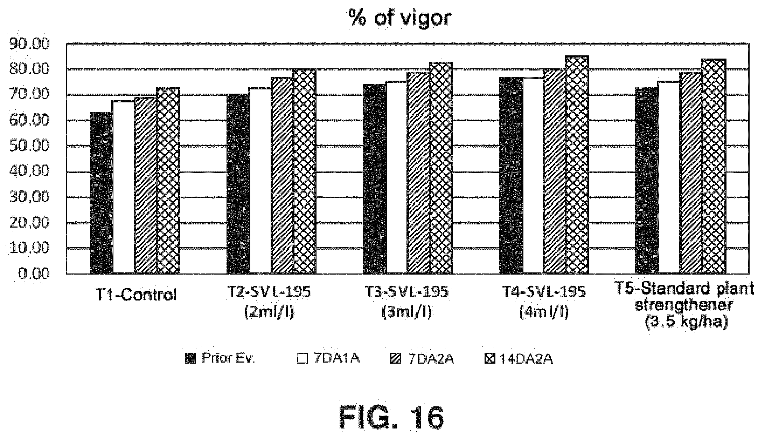

Figure 16 shows the mean percentage of vigor per plot of untreated strawberry plants (T1) and strawberry plants subjected to treatment with a composition of quebracho extract, mimosa extract and potassium sorbate of the invention at a dose of 200 ml/100 l (T2), a dose of 300 ml/100 l (T3), and a dose of 400 ml/100 l (T4), and with a standard plant strengthener (T5).

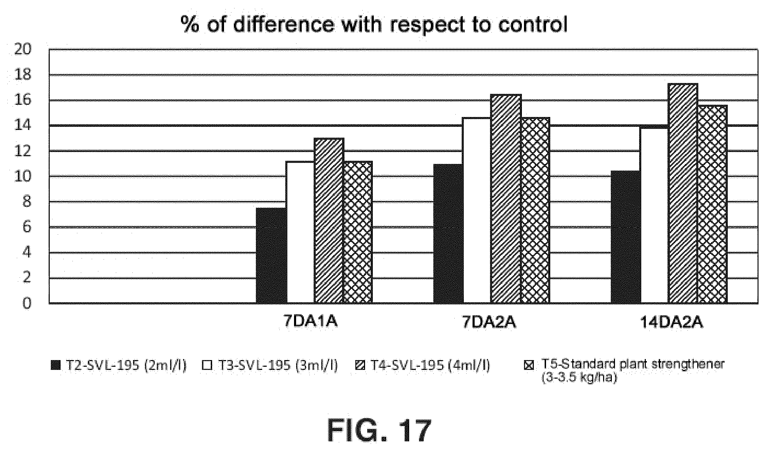

Figure 17 shows the efficacy with respect to the control in terms of the mean percentage of vigor per plot of strawberry plants subjected to treatment with a composition of quebracho extract, mimosa extract and potassium sorbate of the invention at a dose of 200 ml/100 l (T2), a dose of 300 ml/100 l (T3), and a dose of 400 ml/100 l (T4), and with a standard plant strengthener (T5).

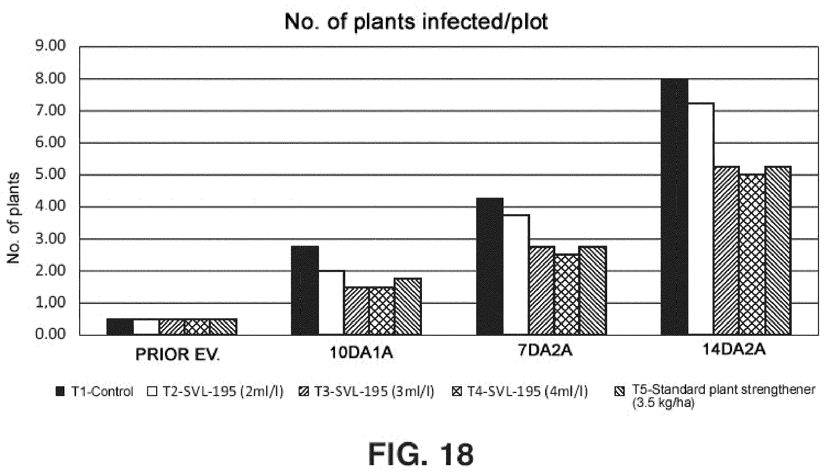

Figure 18 shows the mean number of plants infected by *Bremia lactucae* per plot in untreated lettuce plants (T1) and lettuce plants subjected to treatment with a composition of quebracho extract, mimosa extract and potassium sorbate of the invention at a dose of 200 ml/100 l (T2), a dose of 300 ml/100 l (T3), and a dose of 400 ml/100 l (T4), and with a standard plant strengthener (T5).

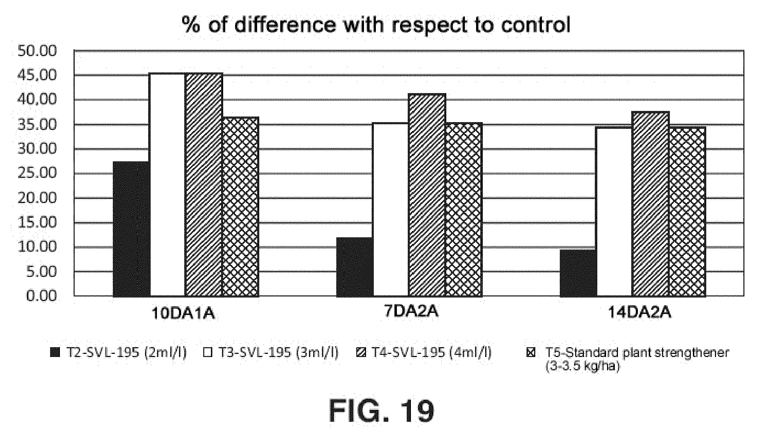

Figure 19 shows the efficacy with respect to the control in terms of the mean number of plants infected by *Bremia lactucae* per plot in lettuce plants subjected to treatment with a composition of quebracho extract, mimosa extract and potassium sorbate of the invention at a dose of 200 ml/100 l (T2), a dose of 300 ml/100 l (T3), and a dose of 400 ml/100 l (T4), and with a standard plant strengthener (T5).

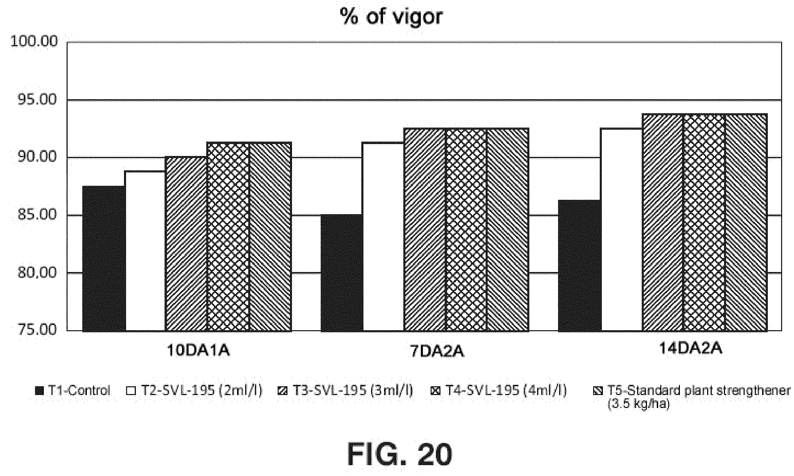

Figure 20 shows the mean percentage of vigor per plot of untreated lettuce plants (T1) and lettuce plants subjected to treatment with a composition of quebracho extract, mimosa extract and potassium sorbate of the invention at a dose of 200 ml/100 l (T2), a dose of 300 ml/100 l (T3), and a dose of 400 ml/100 I (T4), and with a standard plant strengthener (T5).

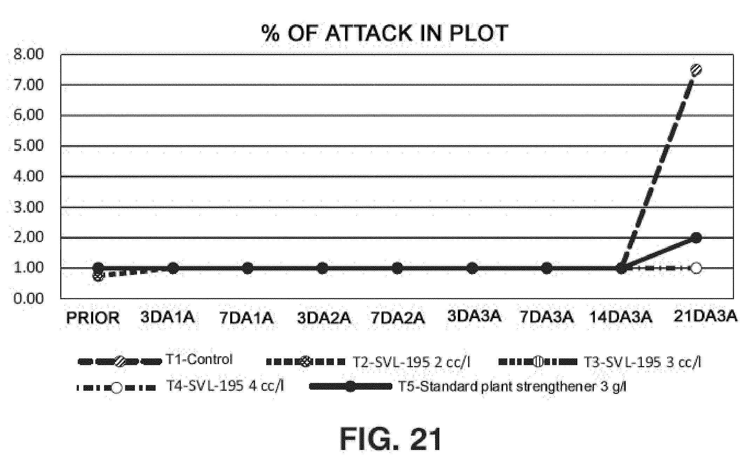

Figure 21 shows the percentage of leaf mass of the entire plot affected by *Peronospora destructor* per plot in untreated garlic plants (T1) and garlic plants subjected to treatment with a composition of quebracho extract, mimosa extract and potassium sorbate of the invention at a dose of 200 ml/100 l (T2), a dose of 300 ml/100 l (T3), and a dose of 400 ml/100 l (T4), and with a standard plant strengthener (T5).

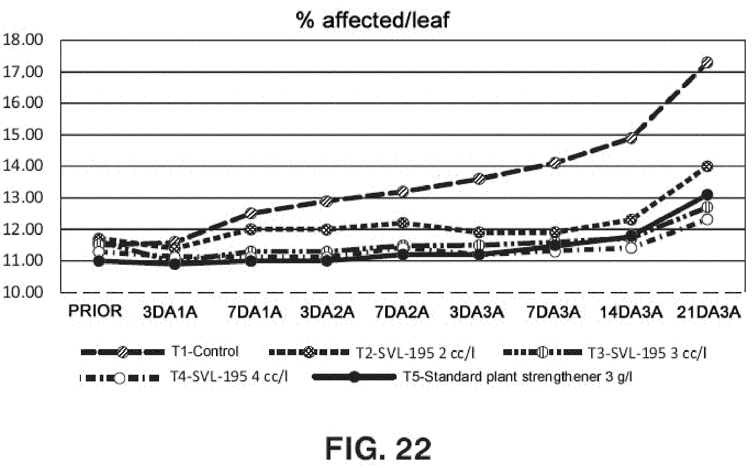

Figure 22 shows the percentage of leaf damage when attacked by *Peronospora destructor* in 25 leaves per plot in untreated garlic plants (T1) and garlic plants subjected to treatment with a composition of quebracho extract, mimosa extract and potassium sorbate of the invention at a dose of 200 ml/100 I (T2), a dose of 300 ml/100 l (T3), and a dose of 400 ml/100 l (T4), and with a standard plant strengthener (T5).

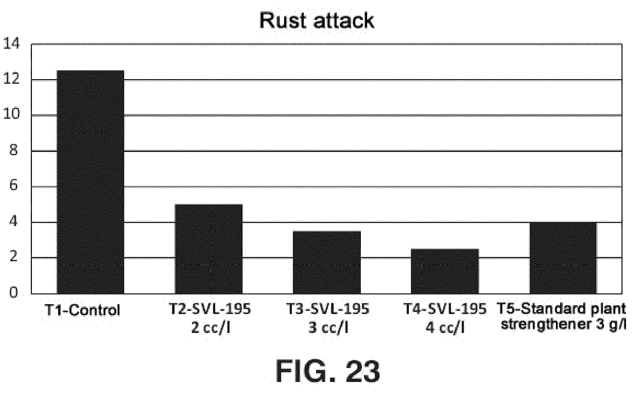

Figure 23 shows the mean percentage of attack by *Puccinia allii* per plot in untreated garlic plants (T1) and garlic plants subjected to treatment with a composition of quebracho extract, mimosa extract and potassium sorbate of the invention at a dose of 200 ml/100 l (T2), a dose of 300 ml/100 l (T3), and a dose of 400 ml/100 l (T4), and with a standard plant strengthener (T5).

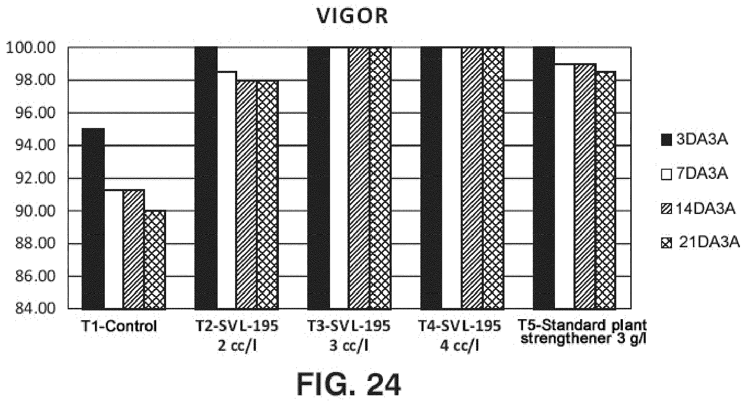

Figure 24 shows the mean percentage of vigor per plot of untreated garlic plants (T1) and garlic plants subjected to treatment with a composition of quebracho extract, mimosa extract and potassium sorbate of the invention at a dose of 200 ml/100 l (T2), a dose of 300 ml/100 l (T3), and a dose of 400 ml/100 I (T4), and with a standard plant strengthener (T5).

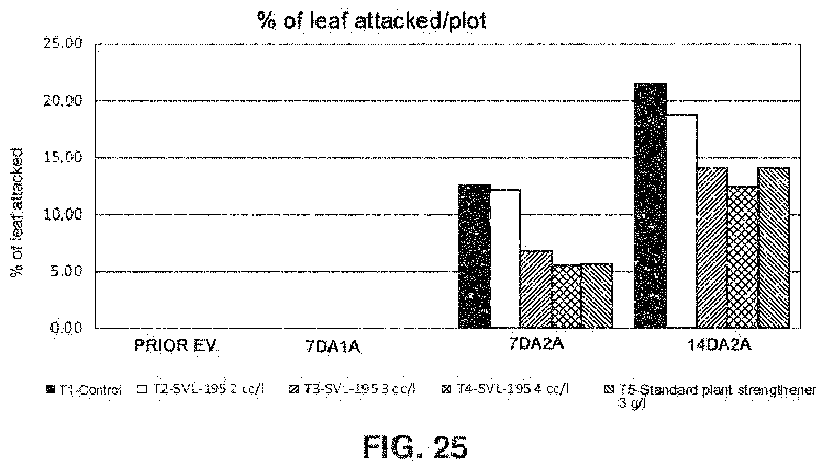

Figure 25 shows the mean percentage of leaf surface of the entire plot attacked by *Phytophthora infestans* in untreated potato plants (T1) and potato plants subjected to treatment with a composition of quebracho extract, mimosa extract and potassium sorbate of the invention at a dose of 200 ml/100 l (T2), a dose of 300 ml/100 l (T3), and a dose of 400 ml/100 l (T4), and with a standard plant strengthener (T5).

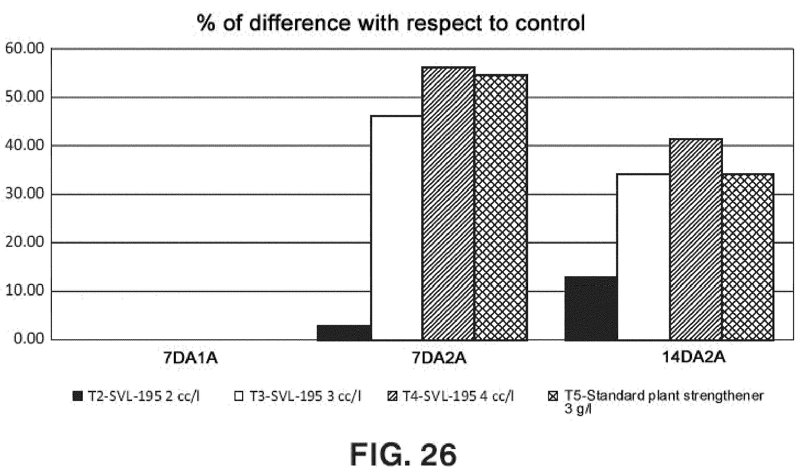

Figure 26 shows the efficacy with respect to the control in terms of the mean percentage of leaf surface of the entire plot attacked by *Phytophthora infestans* in potato plants subjected to treatment with a composition of quebracho extract, mimosa extract and potassium sorbate of the invention at a dose of 200 ml/100 l (T2), a dose of 300 ml/100 l (T3), and a dose of 400 ml/100 l (T4), and with a standard plant strengthener (T5).

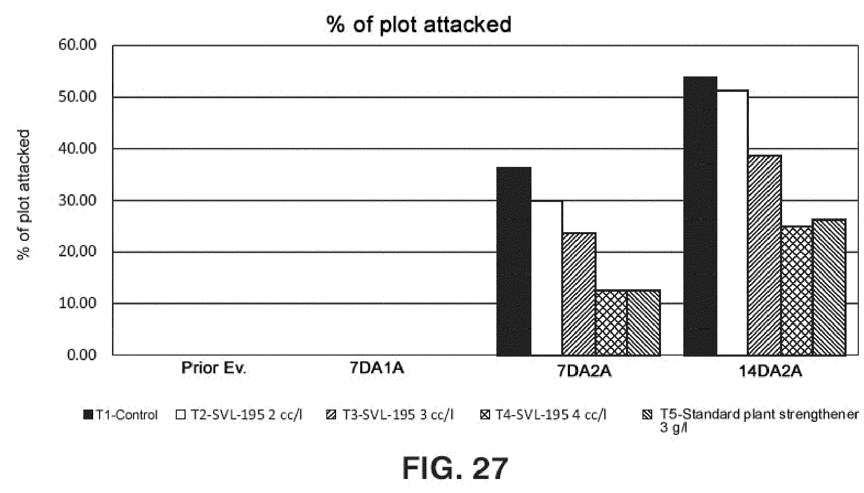

Figure 27 shows the mean percentage of plot attacked by *Phytophthora infestans* per plot in untreated potato plants (T1) and potato plants subjected to treatment with a composition of quebracho extract, mimosa extract and potassium sorbate of the invention at a dose of 200 ml/100 l (T2), a dose of 300 ml/100 l (T3), and a dose of 400 ml/100 l (T4), and with a standard plant strengthener (T5).

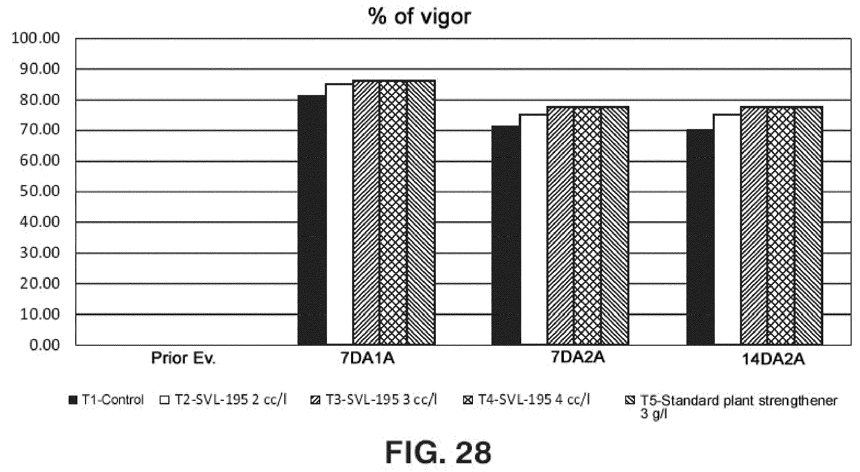

Figure 28 shows the mean percentage of vigor per plot of untreated potato plants (T1) and potato plants subjected to treatment with a composition of quebracho extract, mimosa extract and potassium sorbate of the invention at a dose of 200 ml/100 l (T2), a dose of 300 ml/100 l (T3), and a dose of 400 ml/100 I (T4), and with a standard plant strengthener (T5).

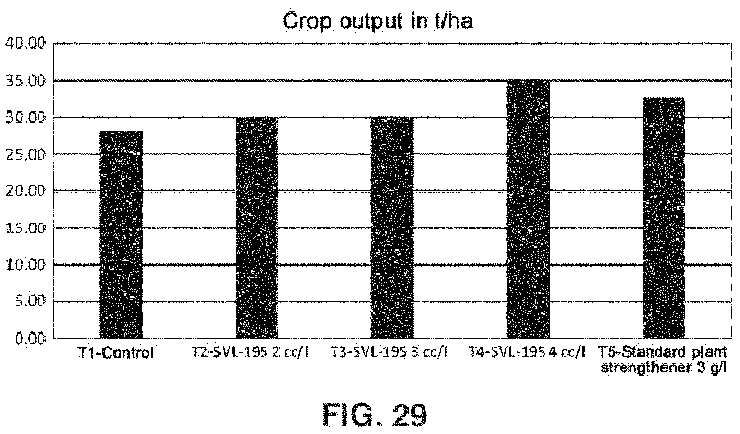

Figure 29 shows potato crop output in tons per hectare obtained in untreated potato plants (T1) and potato plants subjected to treatment with a composition of quebracho extract, mimosa extract and potassium sorbate of the invention at a dose of 200 ml/100 l (T2), a dose of 300 ml/100 l (T3), and a dose of 400 ml/100 l (T4), and with a standard plant strengthener (T5).

### Detailed Description of the Invention

The present invention provides a composition for agricultural use, hereinafter "composition of the invention", comprising a quebracho extract, a mimosa extract or a combination thereof as active ingredients.

In the context of the invention, the term "quebracho extract" refers to a water-soluble extract obtained from *Schinopsis* plants. In a particular embodiment, it is a water-soluble extract obtained from *Schinopsis balansae* plants. In another particular embodiment, it is a water-soluble extract obtained from *Schinopsis lorentzii* plants.

Likewise, in the context of the invention the term "mimosa extract" refers to a water-soluble extract obtained from *Acacia melanoxylon* plants.

Said extracts comprise primarily tannins in a proportion of 60-75% by weight, preferably 70% by weight, with respect to the total weight of extract. More particularly, the quebracho extracts comprise pyrocatechol type tannins.

In a particular embodiment, the composition of the invention comprises 1-30% by weight of active ingredient with respect to the total weight of the composition. In a preferred embodiment, the composition of the invention comprises 7% by weight of active ingredient with respect to the total weight of the composition.

In another particular embodiment, the composition of the invention comprises 1-25% by weight of quebracho extract with respect to the total weight of the composition. In another particular embodiment, the composition of the invention comprises 4-30% by weight of quebracho extract with respect to the total weight of the composition. In a preferred embodiment, the composition of the invention comprises 7% by weight of quebracho extract with respect to the total weight of the composition.

In another particular embodiment, the composition of the invention comprises 1-25% by weight of mimosa extract with respect to the total weight of the composition. In another particular embodiment, the composition of the invention comprises 4-30% by weight of mimosa extract with respect to the total weight of the composition. In a preferred embodiment, the composition of the invention comprises 7% by weight of mimosa extract with respect to the total weight of the composition.

In another particular embodiment, the composition of the invention comprises 1-25% by weight of a combination of mimosa extract and quebracho extract with respect to the total weight of the composition. In another particular embodiment, the composition of the invention comprises 4-30% by weight of a combination of mimosa extract and quebracho extract with respect to the total weight of the composition. In a preferred embodiment, the composition of the invention comprises 7% of a combination of mimosa extract and quebracho extract with respect to the total weight of the composition.

In a particular embodiment, the combination of mimosa extract and quebracho extract consists of 30-50% by weight of mimosa extract and 50-70% by weight of quebracho extract with respect to the total weight of the combination. In a preferred embodiment, the combination of mimosa extract and quebracho extract consists of 45% by weight of mimosa extract and 55% by weight of quebracho extract with respect to the total weight of the combination.

In a particular embodiment, the composition of the invention comprises an additional active ingredient selected from sorbic acid and a sorbic acid salt. In another particular embodiment, the composition of the invention comprises sorbic acid as an additional active ingredient. In another particular embodiment, the composition of the invention comprises a sorbic acid salt as an additional active ingredient. The sorbic acid salts that can be used include potassium sorbate and sodium sorbate. In a preferred embodiment, the composition of the invention comprises potassium sorbate as an additional active ingredient.

Potassium sorbate is a gentle preservative of molecular formula C₆H₇O₂K used in a variety of applications such as wines, personal care and mainly as a food preserving additive.

In a particular embodiment, the composition of the invention comprises a quebracho extract and sorbic acid. In another particular embodiment, the composition of the invention comprises a mimosa extract and sorbic acid. In another particular embodiment, the composition of the invention comprises a quebracho extract, a mimosa extract and sorbic acid

In a particular embodiment, the composition of the invention comprises a quebracho extract and a sorbic acid salt. In another particular embodiment, the composition of the invention comprises a mimosa extract and a sorbic acid salt. In another particular embodiment, the composition of the invention comprises a quebracho extract, a mimosa extract and a sorbic acid salt.

In a preferred embodiment, the composition of the invention comprises a quebracho extract and potassium sorbate. In another preferred embodiment, the composition of the invention comprises a mimosa extract and potassium sorbate. In another preferred embodiment, the composition of the invention comprises a quebracho extract, a mimosa extract and potassium sorbate.

In a particular embodiment, the composition of the invention comprises 1-20% by weight of sorbic acid or sorbic acid salt with respect to the total weight of the composition. In a particular embodiment, the composition of the invention comprises 1-20% by weight of sorbic acid with respect to the total weight of the composition. In a preferred embodiment, the composition of the invention comprises 1-20% by weight of sorbic acid salt with respect to the total weight of the composition. In a preferred embodiment, the composition of the invention comprises 1-20% by weight of potassium sorbate with respect to the total weight of the composition.

In a particular embodiment, the composition of the invention comprises 7% by weight of sorbic acid or sorbic acid salt with respect to the total weight of the composition. In a particular embodiment, the composition of the invention comprises 7% by weight of sorbic acid with respect to the total weight of the composition. In a preferred embodiment, the composition of the invention comprises 7% by weight of sorbic acid salt with respect to the total weight of the composition. In a preferred embodiment, the composition of the invention comprises 7% by weight of potassium sorbate with respect to the total weight of the composition.

In a particular embodiment, the composition of the invention comprises 4-30% by weight of quebracho extract and 1-20% of sorbic acid with respect to the total weight of the composition. In another particular embodiment, the composition of the invention comprises 4-30% by weight of mimosa extract and 1-20% of sorbic acid with respect to the total weight of the composition. In another particular embodiment, the composition of the invention comprises 4-30% by weight of a combination of quebracho extract and mimosa extract and 1-20% by weight of sorbic acid with respect to the total weight of the composition.

In a particular embodiment, the composition of the invention comprises 4-30% by weight of quebracho extract and 1-20% of sorbic acid salt with respect to the total weight of the composition. In another particular embodiment, the composition of the invention comprises 4-30% by weight of mimosa extract and 1-20% of sorbic acid salt with respect to the total weight of the composition. In another particular embodiment, the composition of the invention comprises 4-30% by weight of a combination of quebracho extract and mimosa extract and 1-20% by weight of sorbic acid salt with respect to the total weight of the composition.

In a preferred embodiment, the composition of the invention comprises 4-30% by weight of quebracho extract and 1-20% of potassium sorbate with respect to the total weight of the composition. In another preferred embodiment, the composition of the invention comprises 4-30% by weight of mimosa extract and 1-20% of potassium sorbate with respect to the total weight of the composition. In another preferred embodiment, the composition of the invention comprises 4-30% by weight of a combination of quebracho extract and mimosa extract and 1-20% by weight of potassium sorbate with respect to the total weight of the composition.

As indicated above, the combination of mimosa extract and quebracho extract consists of 30-50% by weight of mimosa extract and 50-70% by weight of quebracho extract with respect to the total weight of the combination; preferably 45% by weight of mimosa extract and 55% by weight of quebracho extract with respect to the total weight of the combination.

In a particular embodiment, the composition of the invention comprises 18% by weight of quebracho extract and 7% of sorbic acid with respect to the total weight of the composition. In another particular embodiment, the composition of the invention comprises 18% by weight of mimosa extract and 7% of sorbic acid with respect to the total weight of the composition. In another particular embodiment, the composition of the invention comprises 18% by weight of a combination of quebracho extract and mimosa extract and 7% by weight of sorbic acid with respect to the total weight of the composition.

In a particular embodiment, the composition of the invention comprises 18% by weight of quebracho extract and 7% of sorbic acid salt with respect to the total weight of the composition. In another particular embodiment, the composition of the invention comprises 18% by weight of mimosa extract and 7% of sorbic acid salt with respect to the total weight of the composition. In another particular embodiment, the composition of the invention comprises 18% by weight of a combination of quebracho extract and mimosa extract and 7% by weight of sorbic acid salt with respect to the total weight of the composition.

In a preferred embodiment, the composition of the invention comprises 18% by weight of quebracho extract and 7% of potassium sorbate with respect to the total weight of the composition. In another preferred embodiment, the composition of the invention comprises 18% by weight of mimosa extract and 7% of potassium sorbate with respect to the total weight of the composition. In another preferred embodiment, the composition of the invention comprises 18% by weight of a combination of quebracho extract and mimosa extract and 7% by weight of potassium sorbate with respect to the total weight of the composition.

As indicated above, the combination of mimosa extract and quebracho extract consists of 30-50% by weight of mimosa extract and 50-70% by weight of quebracho extract with respect to the total weight of the combination; preferably 45% by weight of mimosa extract and 55% by weight of quebracho extract with respect to the total weight of the combination.

In the composition of the invention, the soluble extract or extracts are dissolved in a solvent selected from water, a diol or triol alcohol with 1 to 4 carbon atoms, and mixtures thereof. In a particular embodiment of the composition of the invention, the solvent is water. In another particular embodiment of the composition of the invention, the solvent is a diol or triol alcohol with 1 to 4 carbon atoms. In another particular embodiment of the composition of the invention, the solvent is a mixture of water and a diol or triol alcohol with 1 to 4 carbon atoms. The alcohols that can be used in the composition of the invention include propylene glycol, glycerin and ethylene glycol; preferably propylene glycol.

In a preferred embodiment, the composition of the invention comprises a combination of quebracho extract and mimosa extract dissolved in water. In another preferred embodiment, the composition of the invention comprises a combination of quebracho extract and mimosa extract and potassium sorbate dissolved in water and propylene glycol.

When the composition of the invention comprises a diol or triol alcohol with 1 to 4 carbon atoms, the proportion thereof is 5-20%, preferably 9%, by weight with respect to total weight of the composition.

In a preferred embodiment, the composition of the invention comprises 18% by weight of a combination of quebracho extract and mimosa extract with respect to the total weight of the composition, 7% by weight of potassium sorbate with respect to the total weight of the composition and 9% by weight of propylene glycol with respect to the total weight of the composition.

In addition to the active ingredient or ingredients described above, the composition of the invention can contain other components such as nutrients which can be ammoniacal nitrogen and/or sulfur, for example (preferably in the form of a thiosulfate salt such as ammonium thiosulfate or potassium thiosulfate, for example).

Therefore, in a particular embodiment the composition of the invention comprises a nutrient selected from ammoniacal nitrogen, sulfur and a mixture thereof. In a preferred embodiment, the composition of the invention comprises ammonium thiosulfate.

In a particular embodiment, the composition of the invention comprises 2-15% by weight, preferably 8.5% by weight, of ammoniacal nitrogen with respect to the total weight of the composition. In another particular embodiment, the composition of the invention comprises 20-60% by weight, preferably 43% by weight, of sulfur expressed as SO₃ with respect to the total weight of the composition. In a particular embodiment, the composition of the invention comprises 2-15% by weight of ammoniacal nitrogen with respect to the total weight of the composition and 20-60% by weight of sulfur expressed as SO₃ with respect to the total weight of the composition. In a preferred embodiment, the composition of the invention comprises 8.5% by weight of ammoniacal nitrogen with respect to the total weight of the composition and 43% by weight of sulfur expressed as SO₃ with respect to the total weight of the composition.

In the composition of the invention, other adjuvants or additives that facilitate its formulation for subsequent application are not used given that the extract or extracts have considerable surface active and wetting abilities. Nevertheless, the skilled person may select the additives of the state of the art that he/she considers necessary for the formulation thereof.

In another aspect, the invention provides a method for the preparation of the composition of the invention described above, hereinafter "method of the invention", comprising the steps of:
(a) obtaining a soluble mimosa extract, quebracho extract or a combination thereof; and
(b) dissolving the soluble extract obtained in (a) in a solvent selected from water, a diol or triol alcohol with 1 to 4 carbon atoms, and mixtures thereof.

The soluble extract or extracts can be obtained by means of hot water extraction from the wood dust of *Acacia melanoxylon* plants and/or *Schinopsis* plants (*Schinopsis balansae* and/or *Schinopsis lorentzii).* Likewise, said extracts can be obtained on the market.

Briefly, hot water extraction is performed in the following manner:
- Wood of *Acacia* or *Schinopsis* is selected for extraction since the product is obtained from wood.
- It is ground and subjected to a process of diffusion and hot water extraction at a temperature of about 130°C.
- It is filtered.
- Next, part of the extraction water is evaporated and it is subjected to high temperature for disinfection.
- Finally, it is dried in drying towers and the soluble extract is obtained.

Each of said operations can be performed according to any suitable method of the state of the art to be determined by the skilled person.

In a particular embodiment of the method of the invention, said method comprises an additional step of adding sorbic acid or a sorbic acid salt. In a particular embodiment of the method of the invention, said method comprises an additional step of adding sorbic acid. In a particular embodiment of the method of the invention, said method comprises an additional step of adding a sorbic acid salt. In a preferred embodiment of the method of the invention, said method comprises an additional step of adding potassium sorbate.

In a particular embodiment of the method of the invention, said method comprises an additional step of adding nutrients. In a preferred embodiment of the method of the invention, said method comprises an additional step of adding ammoniacal nitrogen and/or sulfur in the form of ammonium or potassium thiosulfate.

The composition of the invention thus obtained will be applied by foliar spraying at suitable doses according to the crops, vegetative periods and other unspecified circumstances.

In foliar spraying, the necessary dose of the composition of the invention is dissolved in a sufficient amount of water to facilitate uniform distribution of the product on the crop. Correct calibration of the application equipment must be assured.

As indicated, the composition of the invention can be used by means of foliar application, showing an indirect physical and chemical barrier type protective effect against pathologies caused by fungi or oomycetes.

In the same sense, the composition of the invention shows no risks of residue build-up in the crop or in the products derived therefrom (oils, wines, fruits, etc.)

The composition of the invention shows no risks of phytotoxicity nor is it toxic for those who apply it. Given the characteristics of the formulation, the composition of the invention has a very favorable toxicological profile, which is a clear advantage with respect to most formulations used as fungicides, particularly with respect to copper-based products.

On the other hand, the composition of the invention is effective for preventing or mitigating damage caused by biotic stress factors such as oomycete or fungus type pathogens in that it acts on the plant such that it complements the defense mechanisms thereof with the formation of physical and chemical barriers. Said composition also shows excellent efficacy for preventing and mitigating damage caused by a number of adverse factors causing abiotic stress in plants. It also activates mechanisms that cause vegetative development, therefore promoting a general enhancement in crop vegetation and health. The fact that it is a natural product, with very little or no environmental impact, being safe for users, the environment and consumers as previously mentioned must further be pointed out.

In summary, the advantages of the composition of the invention are as follows:
- It controls against a wide range of pathogens indirectly, unlike conventional synthesized fungicides which act directly and are specific for each disease.
- It controls problems caused both by biotic stress, triggered by diseases, and by abiotic stress, triggered by water stress, hot weather, cold weather, etc.
- Its activity for counteracting biotic stress problems is always indirect.
- Crops treated with the composition may be resistant to the attack of certain pathogens because some antimicrobial substances, which will be present in their cells before infection, are provided so they could resist against or counteract the attack of fungus or oomycete type pathogens.
- It contains phenolic compounds called tannins which will act, generally in crops in the cells of fruits, leaves and tissues, at sufficient concentrations to promote resistance to pathogenic microorganisms.
- It is a natural product
- It enhances general crop quality
- It is a safe product for users
- It is a safe product for the environment
- It is a safe product for end consumers
- It has very little or no residue problem

Therefore, in another aspect the invention provides a method for inducing and/or complementing a response to biotic stress in plants fit to be cultivated which comprises applying the composition for agricultural use described above to such plants by means of foliar spraying, hereinafter "method of the invention".

In a particular embodiment, the method of the invention is used for preventing or reducing damage caused by fungi and/or oomycetes.

In another particular embodiment, the method of the invention is used for preventing or reducing damage caused by oidium. In another particular embodiment, the method of the invention is used for preventing or reducing damage caused by rust. In another particular embodiment, the method of the invention is used for preventing or reducing damage caused by mildew.

In a preferred embodiment, the method of the invention is used for preventing or reducing damage caused by *Sphaerotheca fuliginea* in cucumber plants.

In another preferred embodiment, the method of the invention is used for preventing or reducing damage caused by *Sphaerotheca pannosa* in peach tree plants.

In another preferred embodiment, the method of the invention is used for preventing or reducing damage caused by *Puccinia allii* in garlic plants.

In another preferred embodiment, the method of the invention is used for preventing or reducing damage caused by *Peronospora destructor* in onion plants.

In another preferred embodiment, the method of the invention is used for preventing or reducing damage caused by *Peronospora destructor* in garlic plants.

In another preferred embodiment, the method of the invention is used for preventing or reducing damage caused by *Bremia lactucae* in lettuce plants.

In another preferred embodiment, the method of the invention is used for preventing or reducing damage caused by *Phytophthora infestans* in potato plants.

The composition of the invention favors catalyzation of the biosynthesis of polyphenols and phytoalexins, substances produced as a natural defense mechanism in plants that are toxic for fungi and bacteria, so they limit the spread of the pathogen. The composition of the invention therefore acts as a fungistatic agent while at the same time generating self-defenses against diseases of a fungal origin.

The invention also provides a method for inducing a response to abiotic stress in plants fit to be cultivated which comprises applying the composition described above to such plants by means of foliar spraying. In a particular embodiment, the invention provides a method for preventing or reducing damage caused by drought, high temperatures, low temperatures, salinity, heavy metals, ultraviolet radiations and/or soil acidity. In a preferred embodiment, the invention provides a method for preventing or reducing damage caused by drought, high temperatures and/or low temperatures.

Similarly, in another aspect of the invention, a method is provided for increasing the vigor and health of plants fit to be cultivated, characterized in that it comprises applying the composition of the invention described above to such plants by means of foliar spraying.

The application dose as well as the time intervals between applications will be determined by the type of plant to be treated, the stress factor to be treated (for example the fungus or oomycete in question) and the type of application (foliar spraying).

The following examples illustrate the invention and must not be considered as limiting the scope thereof.

### EXAMPLE I

### Preparation of a composition for agricultural use containing 7% by weight of a combination of quebracho extract (45%) and mimosa extract (55%), 8.5% by weight of ammoniacal nitrogen and 43% by weight of sulfur expressed as SO₃

40 g of quebracho extract marketed by UNITAN and 49 g of mimosa extract marketed by UNITAN were dissolved in 235 ml of water and 27 g of propylene glycol in a suitable container under continuous stirring at room temperature. 918 g of ammonium thiosulfate solution were then added, keeping under stirring, for obtaining SVL-204 solution.

### EXAMPLE II

### Preparation of a composition for agricultural use containing 18% by weight of a combination of quebracho extract (45%) and mimosa extract (55%), 7% by weight of potassium sorbate and 9% by weight of propylene glycol

714 ml of water and 103 g of propylene glycol were mixed and 95 g of quebracho extract marketed by UNITAN and 116 g of mimosa extract marketed by UNITAN and 83 g of potassium sorbate were then dissolved in said mixture in a suitable container under continuous stirring at room temperature for obtaining SVL-195 solution.

### EXAMPLE 1

### Evaluation of the activity of the composition obtained in Example I for preventing or mitigating damage caused by the attack of Sphaerotheca fuliginea in greenhouse cucumber

This study was conducted by the company SICOP, which is officially recognized by the Spanish Agricultural Ministry as being competent in conducting Officially Recognized Testing (*Ensayos Oficialmente Reconocidos)* (EOR 50/03).

### Tested compositions

The composition of the invention obtained according to Example I was tested. A product of the present authors which is based on soluble sulfur in the form of hydrogen sulfate with an equivalent SO₃ content of 28% (SVL-040 product) was used for the sake of comparison. Likewise, two products on the market with 80% w/w of wettable sulfur, a product on the market with 12.5% w/v of a triazole, and finally a product on the market with 25% w/v of strobilurin, were used.

The following compositions were thus tested:
- SVL-204 composition
- SVL-040 product (soluble sulfur)
- wettable sulfur product 1
- wettable sulfur product 2
- triazole product; and
- strobilurin product

### Crop

Crop: Cucumber
Botanical name: *Cucumis sativus*
Order: Cucurbitales
Family: Cucurbitaceae
Subfamily: Cucurbitoideae
Genus: *Cucumis*
Species: *C*. *sativus*
Variety: Estrada
Type: Non-grafted
Sowing date: 13.08.11
Transplant date: 01.09.11
Density: 1 plant/m². Spacing between plants: 2 x 0.5 m
Type of irrigation: Drip irrigation
Cultivation system: Under plastic
Planting system: Transplant

### Materials and methods

### Conditions of the study

The test design was in 32 independent plots, each with a 10 m² surface area. The greenhouse was a ridge and furrow type structure. It had no sanding rather cultivation was established on bare soil. It had drip irrigation. Each of the plots consisted of 10 plants. Crop fertigation was the same in all plots.

### Greenhouse characteristics

The testing plot was in a farm with about 13,288 m² surface area to be used entirely for intensive crop farming under plastic. The test was conducted in a greenhouse with a galvanized iron, ridge and furrow type structure. Orientation was East-West. Ventilation in the sides with loamy-clayey soil. 3.5 meter white plastic cover on the ridge. Drip irrigation system, with 2 droppers/m² of a flow rate of 3 l/h.
Soil: Loamy clayey sandy.
Irrigations: The first irrigation was irrigated immediately after transplant with water and then drip irrigated every 1-2 days.
Work: Preparation of terrain before seeding.
Fertilization: Inputs of N, P₂O₅ and K₂O by means of fertigation during the cultivation cycle in all irrigations

**Tested treatments**

| | Product | Dose |
|---|---|---|
| Control 1 (T1) | - | - |
| Control 2 (T2) | SVL-040 (soluble sulfur) | 250 cc/hl |
| Control 3 (T3) | SVL-240 | 200 cc/hl |
| Control 4 (T4) | SVL-240 | 300 cc/hl |
| Control 5 (T5) | Wettable sulfur 1 | 300 g/hl |
| Control 6 (T6) | Wettable sulfur 2 | 30 kg/ha |
| Control 7 (T7) | Triazole | 120 cc/hl |
| Control 8 (T8) | Strobilurin | 80 cc/hl |

### Applications

A total of 3 foliar applications were performed with an interval of 10 days at the start of infestation.

The same machinery was used in all the applications. The type of machine used was a MARUYAMA motorized backpack sprayer with a working pressure of 6 atmospheres. The broth volume used was 1300 l/ha.

### Application methodology

Specifically the activity of the crop with respect to biotic stress caused by the pathogen *Sphaerotheca fuliginea* was evaluated, particularly the total percentage of the leaf area of the affected plot, the percentage of leaf area affected in 25 leaves per plot, and the number of plants affected per plot were evaluated.

### Conducting the test

The action plan that would indicate each of the steps to be taken in the test at all times according to protocol was established at the start of the test:

| Date | Action |
|---|---|
| 14/10/2011 | Prior evaluation and 1^{st} application (1A) |
| 24/10/2011 | Evaluation 10 days after the first application (10DA1A) and second application (2A) |
| 02/11/2011 | Evaluation 9 days after the second application (9DA2A) and third application (3A) |
| 12/11/2011 | Evaluation 10 days after the third application (10DA3A) |

### Results

### 1.- Percentage of leaf area affected per plot

Table 1 shows the evolution of the mean percentage of leaf area affected per plot for each of the treatments.

**Table 1- Mean percentage of leaf area affected by Sphaerotheca fuliginea per plot in cucumber plants subjected to treatment with the different tested products**

| | Prior Ev. | 10DA1A | 9DA2A | 10DA3A |
|---|---|---|---|---|
| T1-Control | 4.00a | 20.50a | 27.50a | 30.00a |
| T2-SVL-040 (soluble sulfur) | 2.25a | 9.25b | 9.50b | 13.75bc |
| T3- SVL-240 (200 ml/100 l) | 3.25a | 13.00b | 13.75b | 11.25c |
| T4- SVL-240 (300 ml/100 l) | 3.50a | 9.25b | 12.00b | 8.75bc |
| T5- Wettable sulfur 1 | 3.25a | 8.75b | 11.25b | 11.25bc |
| T6- Wettable sulfur 2 | 1.75a | 7.75b | 13.75b | 15.00 c |
| T7-triazole | 2.50a | 8.75b | 10.00b | 6.25c |
| T8- Strobilurin | 2.00a | 11.00b | 12.25b | 17.50b |

Statistically significant differences between the control and the remaining treatments were observed both 10DA1A and 9DA2A. Statistically significant differences between the control and the remaining treatments were observed 10DA3A. There were also statistically significant differences between treatments T2, T3, T4, T5 and T6 and the control, as well as treatments T7 and T8 with respect to the control and with respect to one another.

**Table 2- Efficacy of the different tested products in terms of the mean percentage of leaf area affected by Sphaerotheca fuliginea per plot in cucumber plants**

| % of efficacy | 10DA1A | 9DA2A | 10DA3A |
|---|---|---|---|
| T2-SVL-040 (soluble sulfur) | 54.88 | 65.45 | 54.17 |
| T3- SVL-240 (200 ml/100 l) | 36.59 | 50.00 | 62.50 |
| T4- SVL-240 (300 ml/100 l) | 54.88 | 56.36 | 70.83 |
| T5- Wettable sulfur 1 | 57.32 | 59.09 | 62.50 |
| T6- Wettable sulfur 2 | 62.20 | 50.00 | 50.00 |
| T7-Triazole | 57.32 | 63.64 | 79.17 |
| T8- Strobilurin | 46.34 | 55.45 | 41.67 |

Figure 1 depicts these results where it can be seen that the most effective treatments after the last application are those in which the plants were treated with the composition of the invention and with the triazole product.

Treatment T7 (triazole) obtained the best results of the tested products at the end of the test, it being the most effective product in controlling the disease after successive applications. Treatment T2 (soluble sulfur) was the treatment with the most shock effect but shorter persistence, losing efficacy in the last evaluation. In treatments T3 and T4 (composition of the invention at different doses), their efficacies were parallel to one another, in keeping with their dose difference. Both treatments obtained efficacies of 62% and 70%, respectively, when the test ended. Throughout the test, treatment T5 (wettable sulfur 1) showed efficacies close to 60%, whereas treatment T6 (wettable sulfur 2) gradually lost efficacy with successive applications, giving rise to an efficacy of 50% at the end of the test. Treatment T8 (strobilurin) was the worst treatment obtaining the lowest efficacies since the disease colonized the highest number of leaves.

### 2 - Percentage of leaf area affected per leaf in 25 leaves per plot

Table 3 shows the percentage of leaf area affected per leaf in 25 leaves per plot for each of the treatments.

**Table 3 - Mean percentage of leaf area affected by Sphaerotheca fuliginea per leaf in 25 leaves per plot in cucumber plants subjected to treatment with the different tested products**

| | Prior Ev. | 10DA1A | 9DA2A | 10DA3A |
|---|---|---|---|---|
| T1-Control | 6.09a | 11.62a | 13.50a | 15.68a |
| T2-SVL-040 (soluble sulfur) | 2.88a | 4.81b | 4.00b | 4.87c |
| T3- SVL-240 (200 ml/100 l) | 5.64a | 6.73b | 5.12b | 3.56cd |
| T4- SVL-240 (300 ml/100 l) | 4.22a | 5.14b | 4.30b | 3.08cd |
| T5- Wettable sulfur 1 | 5.01a | 4.60b | 4.10b | 3.93cd |
| T6- Wettable sulfur 2 | 2.13a | 4.19b | 4.55b | 4.86c |
| T7-Triazole | 4.65a | 5.17b | 3.63b | 2.54d |
| T8- Strobilurin | 3.37a | 5.92b | 5.71b | 7.75b |

Statistically significant differences between the control and the remaining treatments were observed both 10DA1A and 9DA2A. Statistically significant differences between the control and the remaining treatments are observed 10DA3A. There were also differences among all the treatments with respect to T8 (strobilurin).

**Table 4- Efficacy of the different tested products in terms of the mean percentage of leaf area affected by Sphaerotheca fuliginea per leaf in 25 leaves per plot in cucumber plants**

| % of efficacy | 10DA1A | 9DA2A | 10DA3A |
|---|---|---|---|
| T2-SVL-040 (soluble sulfur) | 58.61 | 70.37 | 68.94 |
| T3- SVL-240 (200 ml/100 l) | 42.08 | 62.07 | 77.30 |
| T4- SVL-240 (300 ml/100 l) | 55.77 | 68.15 | 80.36 |
| T5- Wettable sulfur 1 | 60.41 | 69.63 | 74.94 |
| T6- Wettable sulfur 2 | 63.94 | 66.30 | 69.01 |
| T7-Triazole | 55.51 | 73.11 | 83.80 |
| T8- Strobilurin | 49.05 | 57.70 | 50.57 |

Figure 2 depicts these results where it can be seen that the most effective treatments after the last application are those in which the plants were treated with the composition of the invention and with the triazole product.

Treatment T7 (triazole) obtained the best results of the tested products, it being the most effective product in controlling the disease after successive applications. Treatment T2 (soluble sulfur) obtained its highest efficacy after the second application, a slight decrease in efficacy occurring thereafter. The efficacy of treatments T3 and T4 (composition of the invention at different doses) gradually increased after each application, there being a cumulative effect. At the end of the test both efficacies were 77% and 80%, respectively, so the dose effect is not very significant. Treatment T5 (wettable sulfur 1) obtained efficacies closet to those of treatment with the composition of the invention, although it does not have the cumulative effect of the latter. Treatment T6 (wettable sulfur 2) maintained a very similar efficacy throughout the test, starting with an efficacy of 64% and obtaining an efficacy of 69% at the end of the test. Treatment T8 (strobilurin) was the worst treatment obtaining very low efficacies.

Therefore, it can be concluded that the composition of the invention at the two tested doses obtains good efficacy with respect to other fungicide products on the market and causes the disease to spread less in the plots under study after the third application, particularly at a dose of 300 ml/100 l.

### EXAMPLE 2

### Evaluation of the activity of the composition obtained in Example I as a plant strengthener and stimulant in greenhouse tomato plants

This study was conducted by the company SICOP, which is officially recognized by the Spanish Agricultural Ministry as being competent in conducting Officially Recognized Testing (*Ensayos Oficialmente Reconocidos)* (EOR 50/03).

### Tested compositions

The composition of the invention obtained according to Example I was tested at different application doses. A product of the present authors which is based on soluble sulfur in the form of hydrogen sulfate with an equivalent SO₃ content of 28% (SVL-040 product) was used at different application doses for the sake of comparison. Likewise, a mixture of two standard plant strengthening products based on harpin protein and nitrophenolic compounds, respectively, was used.

The following compositions were thus tested:
- SVL-204 composition (soluble sulfur)
- SVL-040 product (composition of the invention)
- mixture of standard plant strengthening products.

### Crop

Crop: Tomato
Botanical name: *Lycopersicum esculentum*
Order: Solanales
Family: Solanaceae
Genus: Lycopersicum
Species: *L. esculentum*
Variety: Torry
Sowing in seedbed: 07.03.2012
Transplant: 20.04.2012
Planting pattern: 2 x 0.3 (2 m between rows x 0.3 m between plants)
Planting density: 1.67 plants/m²
Type of irrigation: Drip irrigation (stakes)
Type of crop: Hydroponic crop in perlite bags
Planting system: Sowing in seedbed and later transplanted to final terrain

### Materials and methods

### Conditions of the study

The test design was in 32 independent plots, each with a 10 m² surface area. The greenhouse was a multi-tunnel structure and the crop was placed on perlite bags, with a drip irrigation system with 2 droppers per m² having a flow rate of 3 l/h. Each of the plots consisted of about 15 plants. Crop fertigation was the same in all plots

### Greenhouse characteristics

The test was conducted in a greenhouse with a galvanized iron, multi-tunnel type structure. Orientation was East-West with a 4,000 m² surface area and dimensions of 100 m long and 40 m wide. Ventilation in the sides and roofs. White plastic cover. 4.5 meters on the ridge and 3.5 at the gutter. Drip irrigation system, with 2 droppers per m² having a flow rate of 3 l/h.
Soil: Hydroponic. Perlite bags
Irrigations: The post-transplanted plants were first irrigated immediately after planting and then drip irrigated every 1-2 days. They were later irrigated according to drainages.
Work: None. Minor manual weeding to remove weeds
Fertilization: Inputs of N, P₂O₅ and K₂O by means of fertigation during the cultivation cycle in all irrigations. Inputs of microelements through the irrigation water.

**Tested treatments**

| | Product | Dose |
|---|---|---|
| Control 1 (T1) | - | - |
| Control 2 (T2) | SVL-040 (soluble sulfur) | 125 cc/hl |
| Control 3 (T3) | SVL-040 (soluble sulfur) | 250 cc/hl |
| Control 4 (T4) | SVL-040 (soluble sulfur) | 500 cc/hl |
| Control 5 (T5) | SVL-240 | 150 cc/hl |
| Control 6 (T6) | SVL-240 | 300 cc/hl |
| Control 7 (T7) | SVL-240 | 600 cc/hl |
| Control 8 (T8) | Mixture of 2 standard plant strengtheners | 30 g/hl / 1 l/ha |

### Applications

A total of 3 foliar applications were performed. The same machinery was used in all the applications. The type of machine used was a MARUYAMA motorized backpack sprayer with a working pressure of 5 atmospheres. The broth volume used was 1300 l/ha. The broth volume was 650 l/ha in the first application, and the broth volume used for the second and third applications was 750 l/ha.

### Application methodology

Specifically the following parameters were evaluated:
1.- Height of 10 plants located at the center of each plot.
2.- Number of ripe fruits for identifying a possible early crop output.
3.- Weighing of the first three harvests.
4.- Post-harvest evaluation of fruits harvested after the third application.

### Conducting the test

A planning that describes the actions to be performed at all times according to protocol was established at the start of the test:

| Date | Action |
|---|---|
| 29/05/2012 | Prior evaluation and 1^{st} application 1A |
| 05/06/2012 | Evaluation 7DA1A and 2^{nd} application 2A |
| 15/06/2012 | Evaluation 10DA2A and 3^{rd} application 3A |
| 18/06/2012 | Harvest fruits for post-harvest evaluation |
| 21/06/2012 | Weigh first cutting and fruit evaluation 3 days post-harvest |
| 25/06/2012 | Fruit evaluation 7 days post-harvest |
| 27/06/2012 | Weigh second cutting |
| 02/07/2012 | Fruit evaluation 14 days post-harvest |
| 03/07/2012 | Weigh third cutting |

Four repetitions were established in the test. A total of 9 evaluations of height distributed in three applications were conducted: prior evaluation, 7 days after the first application (7DA1A) and 10 days after the second application (10DA1A). An evaluation of fruit ripening before the first harvest, three evaluations of the weight of the harvested fruit and three post-harvest evaluations, conducted 3, 7 and 14 days after the third application.

The test started when the crop had grown to the point that it is considered optimum for obtaining data relating to height, ripening and harvest.

### Results

### 1.- Evaluation of the height of the plants

Table 5 shows the absolute growth of the tomato plants for each of the treatments.

**Table 5 - Absolute growth in tomato plants subjected to treatment with the different tested products**

| | Prior evaluation | 7DA1A | 10DA2A | 7DA1A | 10DA2A |
|---|---|---|---|---|---|
| T1-Control | 125.80 | 153.43 | 197.48 | 27.63 | 44.05 |
| T2-SVL-040 (soluble sulfur) 125 ml/100 I | 126.85 | 160.05 | 207.75 | 33.20 | 47.70 |
| T3-SVL-040 (soluble sulfur) 250 ml/100 I | 128.68 | 156.68 | 205.25 | 28.00 | 48.58 |
| T4-SVL-040 (soluble sulfur) 500 ml/100 l | 133.03 | 162.68 | 208.25 | 29.65 | 45.58 |
| T5-SVL-240 150 ml/100 l | 125.55 | 155.05 | 202.70 | 29.50 | 47.65 |
| T6-SVL-240 300 ml/100 I | 130.28 | 157.03 | 205.63 | 26.75 | 48.60 |
| T7-SVL-240 600 ml/100 I | 132.50 | 163.50 | 213.35 | 31.00 | 49.85 |
| T8- Mixture of 2 standard plant strengtheners | 123.00 | 156.15 | 201.70 | 33.15 | 45.55 |

Figure 3 shows the increase in height of the plants (cm) per plot. It can be seen in said Figure 3 that the most effective treatments after the last application are those in which the plants were treated with the composition of the invention (SVL-240) and with the soluble sulfur product (SVL-040). Specifically, the applications of SVL-040 at the dose of 125 ml/100 l and SVL-240 at the dose of 600 ml/100 l caused the plants to grow taller than the other products. The standard product in this height evaluation obtains an increase of 45.55 centimeters which is less than all the evaluated treatments.

Further height evaluations were not performed since the tomato was budding.

### 2.- Evaluation of the ripening of the fruits

Table 6 shows the results of the evaluation of the ripening of the fruits measured as the number of red fruits per plot in 10 plants per plot.

**Table 6 - Mean number of red fruits per plot in 10 plants per plot subjected to treatment with the different tested products**

| | No. of red fruits |
|---|---|
| T1-Control | 6.75 |
| T2-SVL-040 (soluble sulfur) 125 ml/100 I | 4.50 |
| T3-SVL-040 (soluble sulfur) 250 ml/100 I | 3.00 |
| T4-SVL-040 (soluble sulfur) 500 ml/100 I | 3.00 |
| T5-SVL-240 150 ml/100 I | 4.50 |
| T6-SVL-240 300 ml/100 I | 2.75 |
| T7-SVL-240 600 ml/100 I | 4.00 |
| T8- Mixture of 2 standard plant strengtheners | 3.00 |

Figure 4 depicts these results. It can be seen in said Figure 4 that the treatments that caused the earliest ripening of fruits are those in which the plants were treated with the composition of the invention (SVL-240) at a dose of 150 ml/100 l and with the soluble sulfur product (SVL-040) at a dose of 125 ml/100 l.

### 3.- Evaluation of the weights of the commercial fruit

Table 7 shows the results of the evaluation of the weights of the commercial fruits obtained in the 10 plants located at the center of each plot.

**Table 7 - Weights of the commercial fruits in the 10 tomato plants located at the center of each plot subjected to treatment with the different tested products**

| | Σ Weights (g) | Σ No. of fruits | Mean weight of fruit (g) |
|---|---|---|---|
| T1-Control | 9680.50 | 70.25 | 137.80 |
| T2-SVL-040 (soluble sulfur) 125 ml/100 l | 11065.50 | 74.75 | 148.03 |
| T3-SVL-040 (soluble sulfur) 250 ml/100 l | 8779.50 | 65.25 | 134.55 |
| T4-SVL-040 (soluble sulfur) 500 mt/100 l | 7745.25 | 54.25 | 142.77 |
| T5-SVL-240 150 ml/100 l | 9855.75 | 62.25 | 158.33 |
| T6-SVL-240 300 ml/100 l | 8996.00 | 65.50 | 137.34 |
| T7-SVL-240 600 ml/100 l | 9789.75 | 69.50 | 140.86 |
| T8- Mixture of 2 standard plant strengtheners | 8665.50 | 60.50 | 143.23 |

As can be seen in Table 7, treatment with the soluble sulfur product SVL-040 at the dose of 125 ml/100 l (T2) obtains the greatest number of harvested fruits and the highest crop weight, even though it did not obtain the highest mean weight per fruit.

Of all the theories, treatment with the composition of the invention SVL-204 at the dose of 150 ml/100 l (T5) is that which obtained the highest mean fruit weight and therefore, the highest total cumulative weight.

On the other hand, the treatment with the composition of the invention SVL-204 at the dose of 600 ml/100 l (T7) is that which obtained the greatest number of fruits, even though they did not weigh as much as those treated with the lower dose.

In conclusion, the applications of soluble sulfur (SVL-040) at a dose of 125 ml/100 l and of the composition of the invention (SVL-240) at a dose of 150 ml/100 I obtained a higher ratio of the total weight of the harvested fruits, the number of fruits and the mean fruit weight.

There were no differences in terms of post-harvest since no tomato showed any symptom of disease whatsoever during the 3 evaluations.

Phytotoxicity symptoms were not observed either.

### EXAMPLE 3

### Evaluation of the activity of the composition obtained in Example I for preventing or mitigating damage caused by the attack of Sphaerotheca pannosa on outdoor peach tree

This study was conducted by the company SICOP, which is officially recognized by the Spanish Agricultural Ministry as being competent in conducting Officially Recognized Testing (*Ensayos Oficialmente Reconocidos)* (EOR 50/03).

### Tested compositions

The composition of the invention obtained according to Example I was tested. A product of the present authors which is based on soluble sulfur in the form of hydrogen sulfate with an equivalent SO₃ content of 28% (SVL-040 product) was used for the sake of comparison. Likewise, two products on the market with 80% w/w wettable sulfur, a product on the market with 10% w/w of a triazole and, finally a product on the market with 50% w/w of strobilurin, were used.

The following compositions were thus tested:
- SVL-040 product (soluble sulfur)
- SVL-204 product
- wettable sulfur product 1
- wettable sulfur product 2
- triazole product; and
- strobilurin product.

### Crop

Crop: Peach tree
Variety: Baby Gold
Planting pattern: Rows at 6 m x 4 m between plants
Sowing date: year 2000
Irrigation/dry farming: Drip
Type of soil: Loamy-clayey-marshy
Density: 24 m²/tree
Planting pattern: Rows at 6 m x 4 m between plants
Type of irrigation: Drip irrigation
Cultivation system: Outdoors

### Materials and methods

### Conditions of the study

The testing plot was in a farm with a surface area of about 12,000 m², to be used entirely for planting fruit trees (peach-pear trees). The test was established outdoors in 32 independent plots each with a 96 m² surface area.

Each of the plots consisted of 4 adult trees distributed in 4 cultivation rows separated by 6 m and 4 m between plants.

Crop fertigation was the same in all plots. Three applications were performed with intervals of 13 and 14 days. Drip irrigation system with 5 droppers/m² having a flow rate of 3 l/hour.
Work: Applications by grower.
Fertilization: Inputs of N, P₂O₅ and K₂O by means of fertigation during the cultivation cycle in all irrigations
Water: From well on the farm

**Tested treatments**

| | Product | Dose |
|---|---|---|
| Control 1 (T1) | - | - |
| Control 2 (T2) | SVL-040 (soluble sulfur) | 250 cc/hl |
| Control 3 (T3) | SVL-240 | 200 cc/hl |
| Control 4 (T4) | SVL-240 | 300 cc/hl |
| Control 5 (T5) | Wettable sulfur 1 | 400 g/hl |
| Control 6 (T6) | Wettable sulfur 2 | 30 kg/ha |
| Control 7 (T7) | Triazole | 17 g/hl |
| Control 8 (T8) | Strobilurin | 15 g/hl |

### Applications

A total of 3 foliar applications were performed, with the exception of T6 where applications were performed by dusting with the intervals of 13 and 14 days.

The test started at the onset of infection with very mild pathogen attack intensity.

The same machinery was used in all the applications. The type of machine used was a MARUYAMA motorized backpack sprayer with a working pressure of 6 atmospheres. Dusting was performed with a duster.

A broth volume of 1650 l/ha was used in all applications.

### Application methodology

The following parameters were evaluated:
1.- Phytotoxicity: Visual assessment of any symptom of crop intolerance in each plot. It is expressed in % with respect to the control. A total of 3 evaluations coinciding with efficacy evaluations were conducted.
2.- Vigor: Assessment of crop vigor in each plot according to a scale of 0-100 and expressed in comparison with the control = 100
3.- Efficacy:

### % of leaf area affected

The percentage of leaf area affected was evaluated in 50 completely unfurled leaves per plot, chosen randomly from the lower-middle area of the tree where the disease manifests.

The average in each treatment was calculated and the number of infected leaves is obtained by applying Henderson & Tilton's formula.

### No. of infected leaves

The percentage of infected leaves (leaves with the presence of pathogen) was evaluated.

### Conducting the test

The action plan that would indicate each of the tasks to be performed in the test at all times according to protocol was established at the start of the test:

| Date | Action | Time | BBCH |
|---|---|---|---|
| 31.05.12 | 1^{st} EVALUATION | 0DA1A (Prior) | 75 |
| 31.05.12 | 1^{st} APPLICATION | Start | 75 |
| 31.05.12 | 2^{nd} EVALUATION | 13DA1A | 76 |
| 13.06.12 | 2^{nd} APPLICATION | 13DA1A | 76 |
| 27.06.12 | 3^{rd} EVALUATION | 14DA2A | 77 |
| 27.06.12 | 3^{rd} APPLICATION | 14DA2A | 77 |
| 06.07.12 | 4^{th} EVALUATION | 9DA3A | 78 |

### Results

### 1.- Phytotoxicity

Table 8 shows the phytotoxicity results.

**Table 8- Percentage of phytotoxicity of the different tested products in peach tree plants**

| | % of phytotoxicity | | |
|---|---|---|---|
| Treatment | 13.06.12 | 27.06.12 | 06.07.12 |
| T1-Control | 0 | 0 | 0 |
| T2-SVL-040 (soluble sulfur) | 0 | 0 | 0 |
| T3- SVL-240 (200 ml/100 l) | 0 | 0 | 0 |
| T4- SVL-240 (300 ml/100 l) | 0 | 0 | 0 |
| T5- Wettable sulfur 1 | 0 | 0 | 0 |
| T6- Wettable sulfur 2 | 0 | 0 | 0 |
| T7-Triazole | 0 | 0 | 0 |
| T8- Strobilurin | 0 | 0 | 0 |

All the treatments were well tolerated.

### 2.- Vigor

Table 9 shows the vigor results.

**Table 9- Percentage of vigor in peach tree plants of the different tested products**

| | % of vigor | | |
|---|---|---|---|
| Treatment | 13.06.12 | 27.06.12 | 06.07.12 |
| T1-Control | 100 | 100 | 100 |
| T2-SVL-040 (soluble sulfur) | 100 | 100 | 100 |
| T3- SVL-240 (200 ml/100 l) | 100 | 100 | 100 |
| T4- SVL-240 (300 ml/100 l) | 100 | 100 | 100 |
| T5- Wettable sulfur 1 | 100 | 100 | 100 |
| T6- Wettable sulfur 2 | 100 | 100 | 100 |
| T7-Triazole | 100 | 100 | 100 |
| T8- Strobilurin | 100 | 100 | 100 |

No treatment negatively influenced crop development or appearance.

### 3.- Efficacy

### 3.1.- Percentage of leaf area affected

Table 10 shows the evolution of the mean percentage of leaf area affected per plot for each of the treatments.

**Table 10- Mean percentage of leaf area affected by Sphaerotheca pannosa per plot in peach tree plants subjected to treatment with the different tested products**

| | % of leaf area affected | | | |
|---|---|---|---|---|
| Treatment | Prior Ev. | 13DA1A | 14DA2A | 9DA3A |
| T1-Control | 0.25 a | 0.51 a | 1.87 a | 2.35 a |
| T2-SVL-040 (soluble sulfur) | 0.28 a | 0.19 b | 0.48 b | 0.53 b |
| T3- SVL-240 (200 ml/100 l) | 0.27 a | 0.19 b | 0.49 b | 0.56 b |
| T4- SVL-240 (300 ml/100 l) | 0.32 a | 0.19 b | 0.46 b | 0.50 b |
| T5- Wettable sulfur 1 | 0.31 a | 0.15 b | 0.47 b | 0.49 b |
| T6- Wettable sulfur 2 | 0.25 a | 0.13 b | 0.42 b | 0.51 b |
| T7-Triazole | 0.28 a | 0.10 b | 0.38 b | 0.37 b |
| T8- Strobilurin | 0.25 a | 0.10 b | 0.35b | 0.37 b |

The test started with a prior homogenous infestation of the entire test population without significant differences between treatments.

The differences between treatments are insignificant but their differences with respect to the control are significant.

**Table 11- Efficacy of the different tested products in terms of the mean percentage of leaf area affected by Sphaerotheca pannosa per plot in peach tree plants**

| | % of efficacy | | | |
|---|---|---|---|---|
| Treatment | (% of leaf area affected) | | | |
| | Prior Ev. | 13DA1A | 14DA2A | Mean |
| T2-SVL-040 (soluble sulfur) | 62.75 | 74.60 | 77.66 | 71.67 |
| T3- SVL-240 (200 ml/100 l) | 63.73 | 73.80 | 76.17 | 71.23 |
| T4- SVL-240 (300 ml/100 l) | 62.75 | 75.40 | 78.72 | 72.29 |
| T5- Wettable sulfur 1 | 71.57 | 75.13 | 78.30 | 75.00 |
| T6- Wettable sulfur 2 | 74.51 | 77.81 | 78.51 | 76.94 |
| T7-Triazole | 80.39 | 79.95 | 84.26 | 81.53 |
| T8- Strobilurin | 81.37 | 81.55 | 84.47 | 82.46 |

*Sphaerotheca pannosa* infection intensity was mild and located in the leaves of the lower part of the trees. The shoots were not infected.

All the treatments were well tolerated by the crop.

Figure 5 shows these results where it can be seen that the composition of the invention has an efficacy similar to that of the soluble sulfur product and to that of standard wettable sulfur-based products, preventing damage caused by the attack of *Sphaerotheca pannosa* in a manner which is acceptable in practice. Its efficacy was slightly less than the triazole- and strobilurin-based chemically synthesized products, the activity of which was good.

### 3.2.- Percentage of infected leaves

Table 12 shows the evolution of the mean percentage of leaves infected per plot for each of the treatments.

**Table 12 - Mean percentage of leaves infected by Sphaerotheca pannosa per plot in peach tree plants subjected to treatment with the different tested products**

| | % of infected leaves | | | |
|---|---|---|---|---|
| Treatment | Prior Ev. | 13DA1A | 14DA2A | 9DA3A |
| T1-Control | 7.50 | 14.50 | 24.00 | 22.00 |
| T2-SVL-040 (soluble sulfur) | 7.50 | 9.50 | 9.00 | 9.50 |
| T3- SVL-240 (200 ml/100 l) | 5.50 | 7.00 | 8.50 | 9.00 |
| T4- SVL-240 (300 ml/100 l) | 6.50 | 6.50 | 8.50 | 8.50 |
| T5- Wettable sulfur 1 | 6.50 | 7.00 | 9.50 | 8.50 |
| T6- Wettable sulfur 2 | 7.00 | 5.00 | 8.50 | 8.50 |
| T7-Triazole | 4.50 | 5.00 | 7.50 | 6.50 |
| T8- Strobilurin | 6.00 | 4.00 | 8.00 | 6.50 |

**Table 13 - Efficacy of the different tested products in terms of the mean percentage of leaves infected by Sphaerotheca pannosa per plot in peach tree plants**

| | % of efficacy | | |
|---|---|---|---|
| Treatment | (% of infected leaves) | | |
| | 13DA1A | 14DA2A | 9DA3A |
| T2-SVL-040 (soluble sulfur) | 34.48 | 62.50 | 56.82 |
| T3- SVL-240 (200 ml/100 l) | 51.72 | 64.58 | 59.09 |
| T4- SVL-240 (300 ml/100 l) | 55.17 | 64.58 | 61.36 |
| T5- Wettable sulfur 1 | 51.72 | 60.42 | 61.36 |
| T6- Wettable sulfur 2 | 65.52 | 64.58 | 61.36 |
| T7-Triazole | 65.52 | 68.75 | 70.45 |
| T8- Strobilurin | 72.41 | 66.67 | 70.45 |

Figure 6 shows these results where it can be seen that the efficacy thereof in terms of the number of infected leaves is also similar or slightly less than that of the tested standard products.

### EXAMPLE 4

### Evaluation of the activity of the composition obtained in Example II for preventing or mitigating damage caused by the attack of Peronospora destructor and as a plant strengthener and stimulant in outdoor onion plants

This study was conducted by the company SICOP, which is officially recognized by the Spanish Agricultural Ministry as being competent in conducting Officially Recognized Testing (*Ensayos Oficialmente Reconocidos)* (EOR 50/03).

### Tested compositions

The composition of the invention obtained according to Example II was tested. A standard plant strengthening product based on *Saccharomyces cerevisiae* extracts and carboxylamines was used for the sake of comparison. This standard, and not a conventional plant protection product, was chosen because the efficacy of the composition of the invention as a product that induces defenses against stress was to be determined.

The following compositions were thus tested:
SVL-195 composition

Standard plant strengthening product

### Crop

Crop: Onion
Botanical name: *Allium cepa*
Order: Asparagales
Family: Amaryllidaceae
Subfamily: Allioideae
Genus: *Allium*
Species: *A. cepa*
Variety: Babosa
Transplant date: 11.08.13
Planting density: 19 plants/m². Spacing between plants: 3.05 x 0.7 m
Type of irrigation: Furrow irrigation
Cultivation system: Outdoors, bare soil
Planting system: Sowing in seedbed and later transplanted to final terrain

### Materials and methods

### Conditions of the study

The test design was by means of randomly distributed plots. Four repetitions were conducted for each theory contained in the protocol, the control being included in the testing plots. The test was thus established in 20 independent plots each with a 5 m² surface area. Each of the plots consisted of about 100 plants. The crop in all plots was managed the same way.

The test was conducted in an outdoor plot. Orientation was East-West. The total surface area was 3475.75 m². The soil was bare soil.

The plot irrigation system was furrow irrigation.
Soil: Loamy-Clayey.
Irrigations: First irrigation immediately after transplant and subsequent irrigations as needed.
Work: Manual weeding to remove weeds.
Fertilization: Inputs of N, P₂O₅ and K₂O by means of direct incorporation into the soil throughout the entire crop cycle as needed
Maintenance: Maintenance applications were not carried out in testing plots.

**Tested treatments**

| | Product | Dose |
|---|---|---|
| Control 1 (T1) | - | - |
| Control 2 (T2) | SVL-195 | 200 ml/100 l |
| Control 3 (T3) | SVL-195 | 300 ml/100 l |
| Control 4 (T4) | SVL-195 | 400 ml/100 l |
| Control 5 (T5) | Standard plant strengthening product | 200 ml/100 l |

### Applications

A total of 2 foliar applications were performed.

The same machinery was used in all the applications, a MARUYAMA motorized backpack sprayer with a working pressure of 5 atmospheres.

The broth volume used both in the first and in the second application was 400 l/ha.

### Application methodology

The following parameters were evaluated:
1.- Evaluation on the effect of inducing resistance to abiotic stress. The effects of the product on crop vegetation:
   - Vigor: Vigor was evaluated to observe if the product has a direct effect on the plant. All the plots were observed and the plot in the best condition was used as a reference, giving it a value of 100%; the other plots were then evaluated using the plot which had been given the highest value as a reference.
2.- Evaluation of crop response to biotic stress. In this case, crop response to the attack of *Peronospora destructorwas* evaluated.
   - % of affected surface area of the entire plot: a percentage of affected surface area for each plot was estimated. A scale suited to the attack level was established according to protocol. In this case, for a medium-low *Peronospora destructor* attack level the scale ranged from 0 to 10, 1 being without infection, 10 being 50% of the plot infected.
   - % of affected leaf surface: the percentage of leaf surface damaged by the pathogen was evaluated in 25 leaves of each plot, taken from the central area of the plot.

### Conducting the test

A planning that described the actions to be performed at all times according to protocol was established at the start of the test:

| Date | Action |
|---|---|
| 27/03/2013 | Prior evaluation and 1^{st} application |
| 27/03/2013 | 6DA1A* |
| 01/04/2013 | 10DA1A and 2^{nd} application |
| 04/04/2013 | 3DA2A |
| 08/04/2013 | 7DA2A |
| 15/04/2013 | 15DA2A |

The onset of the disease at the end of March coincided with a damp period and temperatures that were ideal for *Peronospora destructor* development. The maintenance of the conditions that were ideal for the disease gave rise to a slow progression in the control that enabled correctly conducting the test, being able to compare the effect of the products with respect to the control.

### Results

### 1.- Crop response to abiotic stress

### 1.1 Vigor

Vigor measurements per plot for each of the treatments are shown in Table 14.

**Table 14 - Mean percentages of vigor per plot of onion plants obtained for each of the different tested products**

| | PRIOR EV. | 6DA1A | 10DA1A | 3DA2A | 7DA2A | 15DA2A |
|---|---|---|---|---|---|---|
| T1-Control | 97.50a | 96.25a | 96.00a | 96.00a | 96.00a | 95.75a |
| T2-SVL-195 (200 ml/hl) | 97.75a | 98.75a | 98.50a | 98.50a | 98.50a | 98.00a |
| T3-SVL-195 (300 ml/hl) | 99.00a | 99.50a | 99.50a | 99.50a | 99.50a | 100.00a |
| T4-SVL-195 (400 ml/hl) | 98.75a | 99.50a | 100.00a | 100.00a | 100.00a | 100.00a |
| T5- Standard plant strengthener (200-300 g/hl) | 99.00a | 99.50a | 99.00a | 99.00a | 99.00a | 98.75a |

Vigor was evaluated to observe if the product had a direct effect on the plant. All the plots were sampled and the plot in the best condition was used as a reference, giving it a value of 100%; the other plots were then evaluated using the plot which had been given the highest value as a reference.

Figure 7 depicts these results. Large differences in terms of vigor were not observed. It is observed that treatment T4, composition of the invention applied at the dose of 400 ml/100 I, obtains the best vigor. Treatment T3, composition of the invention applied at 300 ml/100 I, obtained very similar results. Both treatments were more effective than the control. Standard treatment T5 had a value similar to treatment T3.

### 2.- Plant response to biotic stress caused by pathogen

As a response to a type of biotic stress caused by *Peronospora destructor,* the application of SVL-195 shows that the plant develops a defense mechanism as a response to the action of the product, preventing the pathogen from infecting the plant or preventing the disease from progressing once the plant is infected. The effect of the treatment is cumulative.

Plant reaction to the pathogen attack is very different in the treated plants with respect to those of the controls.

### 2.1.- Percentage of affected surface of the entire plot

The first symptoms uniformly distributed over the entire test surface were observed at the start of the test.

The *Peronospora destructor* infection level was medium-low, therefore, the scale used ranges from 0 to 10; 1 being without infection, 10 being 50% of foliage infected.

The percentages of attack per plot are shown below according to the suitable scale.

**Table 15- Mean percentages of leaf surface attacked by Peronospora destructor of the entire plot in onion plants for each of the different tested products**

| | PRIOR EV. | 6DA1A | 10DA1A | 3DA2A | 7DA2A | 15DA2A |
|---|---|---|---|---|---|---|
| T1-Control | 0.63a | 1.25a | 2.00a | 2.13a | 2.25a | 2.38a |
| T2-SVL-195 (200 ml/hl) | 0.63a | 1.00a | 1.25a | 1.63a | 1.75a | 2.00a |
| T3-SVL-195 (300 ml/hl) | 0.50a | 0.75a | 0.88a | 1.00a | 1.13a | 1.13a |
| T4-SVL-195 (400 ml/hl) | 0.50a | 0.75a | 0.75a | 0.75a | 1.00a | 1.13a |
| T5- Standard plant strengthener (200-300 g/hl) | 0.75a | 0.88a | 0.88a | 1.13a | 1.25a | 1.38 |

Figure 8 depict these results. The control showed a larger attacked surface area of the plot throughout the entire test with respect to the treated plots, which progressively increased throughout the test at a higher rate than in the treated plots.

After the first application, differences between the control plots and the treated plots were already considerable. Likewise, it could be observed that the disease progressed at a higher rate in the control than in the plots where SVL-195 was applied. Therefore, it was observed that in the plots where SVL-195 was applied, the disease took longer to spread and the infection level was always less than in the control.

With respect to the statistical study, there were no statistically significant differences with respect to the control for any of the tested theories.

Table 16 shows the percentages of the reduction of attack with respect to the control.

**Table 16 - Percentages of reduction of attack by Peronospora destructor per plot in onion plants for each of the different tested products with respect to the control**

| | 6DA1A | 10DA1A | 3DA2A | 7DA2A | 15DA2A |
|---|---|---|---|---|---|
| T2-SVL-195 (200 ml/hl) | 20.00 | 37.50 | 23.53 | 22.22 | 15.79 |
| T3-SVL-195 (300 ml/hl) | 40.00 | 56.25 | 52.94 | 50.00 | 52.63 |
| T4-SVL-195 (400 ml/hl) | 40.00 | 62.50 | 64.71 | 55.56 | 52.63 |
| T5- Standard plant strengthener (200-300 g/hl) | 30.00 | 56.25 | 47.06 | 44.44 | 42.11 |

Figure 9 depicts these results. Six days after the first application, differences between the treated and control plots can already be seen. SVL-195 applied at a dose of 200 ml/100 l (T2) obtained a rather low percentage of disease reduction with respect to the control, whereas doses of 300 (T3) and 400 (T4) ml/100 l obtained a 40% reduction. The standard obtained a 30% reduction. Ten days of the first application, attack on the control increased considerably, whereas the response generated in the plant successfully stops disease progression, T3 stands out with a 56% reduction with respect to the control and T4 with a 62% reduction. T2 remained considerably below these values and the standard remained in the line of T3. After the second application, the results were maintained in general and improved for T4, virtually obtaining a 65% reduction with respect to the control.

Seven and fifteen days after the second application, the results dropped in general, the effect of treatments 3 and 4, which still successfully stopped disease progression to a great extent, stands out.

### 2.2.- Percentage of leaf area attacked in 25 leaves of each plot.

The percentage of leaf surface attacked was estimated to be 25 leaves per plot, taken from the center of the plot. Table 17 shows the mean percentages obtained.

**Table 17- Mean percentage of leaf area attacked by Peronospora destructor in 25 leaves of each plot in onion plants for each of the different tested products**

| | PRIOR EV. | 6DA1A | 10DA1A | 3DA2A | 7DA2A | 15DA2A |
|---|---|---|---|---|---|---|
| T1-Control | 3.95a | 5.71a | 8.73a | 9.70a | 10.90a | 11.42a |
| T2-SVL-195 (200 ml/hl) | 3.55a | 4.88a | 6.28a | 8.70a | 9.20a | 10.16a |
| T3-SVL-195 (300 ml/hl) | 1.87a | 3.14a | 3.79a | 5.12a | 5.91a | 6.52a |
| T4-SVL-195 (400 ml/hl) | 1.94a | 3.08a | 3.88a | 4.88a | 4.90a | 5.55a |
| T5- Standard plant strengthener (200-300 g/hl) | 2.92a | 3.33a | 4.04a | 5.46a | 5.65a | 7.03a |

Figure 10 depicts these results. There were no significant differences between the treatments and the control up to ten days after the first application. The differences between treatments and control were best observed 3DA2A and 7DA2A.

It was observed in treatment T4 that the value of the mean percentages of leaves was less than the value of the control, even below the value of the treatment used. Treatments T2 and T3 showed values that are greater than treatment T4.

Table 18 shows the percentages of reduction of attack with respect to the control.

**Table 18- Percentages of reduction of attack by Peronospora destructor per plot in onion plants for each of the different tested products with respect to the control (percentages of leaf area affected)**

| | 6DA1A | 10DA1A | 3DA2A | 7DA2A | 15DA2A |
|---|---|---|---|---|---|
| T2-SVL-195 (200 ml/hl) | 14.54 | 28.06 | 10.31 | 15.60 | 11.03 |
| T3-SVL-195 (300 ml/hl) | 45.01 | 56.59 | 47.22 | 45.78 | 42.91 |
| T4-SVL-195 (400 ml/hl) | 46.06 | 55.56 | 49.69 | 55.05 | 51.40 |
| T5- Standard plant strengthener (200-300 g/hl) | 41.68 | 53.72 | 43.71 | 48.17 | 38.44 |

Figure 11 depicts these results. Six days after the first application, T3 and T4 obtained about a 45% reduction of attack with respect to the control. These results improved 10 days after the first application although comparison between the very similar treatments T3 and T4 remained the same. After the second application, the results were very similar. T4 stood out 15 days after the second application with a 51% reduction of attack with respect to the control, a result exceeding the other treatments, including the standard.

### Conclusions

As a response to a type of biotic stress - caused by *Peronospora destructor* - the application of SVL-195 shows that the plant develops a defense mechanism as a response to the action of the product, preventing the pathogen from infecting the plant or the disease from progressing once the plant is infected. The effect of the treatment is cumulative.

The response brought about by the application of SVL-195 at the doses of 300 and 400 ml/hl successfully slows down and contains disease progression in the plant.

Crop vigor was greater in plots where SVL-195 was applied at the doses of 300 and 400 ml/hl, both with respect to the control and with respect to the standard. Differences in terms of color or biomass were not observed.

### EXAMPLE 5

### Evaluation of the activity of the composition obtained in Example II for preventing or mitigating damage caused by the attack of Phytophthora cactorum and as a lant strengthener and stimulant in outdoor trawberry plants

This study was conducted by the company SICOP, which is officially recognized by the Spanish Agricultural Ministry as being competent in conducting Officially Recognized Testing (*Ensayos Oficialmente Reconocidos)* (EOR 50/03).

### Tested compositions

The composition of the invention obtained according to Example II was tested. A standard plant strengthening product based on *Saccharomyces cerevisiae* extracts and carboxylamines was used for the sake of comparison. This standard, and not a conventional plant protection product, was chosen because the efficacy of the composition of the invention as a product that induces defenses against stress was to be determined.

The following compositions were thus tested:
- SVL-195 composition
- Standard plant strengthening product

### Crop

Crop: Strawberry
Botanical name: *Fragaria vesca*
Order: Rosales
Family: Rosaceae
Subfamily: Rosoideae
Genus: *Fragaria*
Species: *F. vesca*
Variety: Camarosa
Transplant date: 02.11.12
Planting density: 10 plants/m². Spacing between plants: 1 x 0.2 m
Type of irrigation: Drip irrigation
Cultivation system: Outdoors, in ridges covered with low transparent plastic tunnels, soil covered with black plastic
Planting system: Reproduction by stolons in nurseries and later transplanted to final terrain

### Materials and methods

### Conditions of the study

The test design was by means of randomly distributed plots. Four repetitions were conducted for each theory contained in the protocol, the control being included in the testing plots. The test was thus established in 20 independent plots each with a 2.75 m² surface area. Each of the plots consisted of about 28 plants. The crop in all plots was managed the same way.

The test was conducted in an outdoor plot; the crop was planted in ridges covered with low transparent plastic tunnels. Orientation was North-South. The total surface area of the farm was 7824 m².

The irrigation system of the plot was drip irrigation.
Soil: Loamy
Irrigations: The post-transplanted plants were first irrigated immediately after planting. The crop was then irrigated according to its water needs.
Work: Manual weeding to remove weeds.
Fertilization: Inputs of N, P and K and micronutrients in the irrigation water. Crop fertilization was the same in all plots.
Maintenance: Several applications were done with an insecticide-acaricide due to the presence of red spider mites (*Tetranychus urticae*) in the testing plots. The test was also treated with wettable sulfur due to the risk of the onset of oidiopsis in the testing plots. These treatments were the same as the handling carried out by the farmer.

**Tested treatments**

| | Product | Dose |
|---|---|---|
| Control 1 (T1) | - | - |
| Control 2 (T2) | SVL-195 | 200 ml/100 I |
| Control 3 (T3) | SVL-195 | 300 ml/100 I |
| Control 4 (T4) | SVL-195 | 400 ml/100 I |
| Control 5 (T5) | Standard plant strengthening product | 300 g/100 I |

### Applications

A total of 2 foliar applications were performed, with the exception of theory 5 which was applied through irrigation, as established in the protocol.

The same machinery was used in all the applications, a MARUYAMA motorized backpack sprayer with a working pressure of 5 atmospheres.

The broth volume used both in the first application and in the second application was 550 l/ha. In theory 5, 4 liters of broth were used for 4 plots.

### Application methodology

The following parameters were evaluated:
1.- Evaluation on the effect of inducing resistance to abiotic stress. The effects of the product on crop vegetation:
   - Vigor: Vigor was evaluated to observe if the product has a direct effect on the plant. All the plots were observed and the plot in the best condition was used as a reference, giving it a value of 100%; the other plots were then evaluated using the plot which had been given the highest value as a reference.
2.- Evaluation of crop response to biotic stress. In this case, crop response the pressure caused by of *Phytophthora cactorum* was evaluated:
   - No. of plants attacked per plot: caused by disease development
   - % of attack in leaf: the leaf surface area of 25 leaves per plot which is damaged by the pathogen was evaluated.

### Conducting the test

A planning that described the actions to be performed at all times according to protocol was established at the start of the test:

| Date | Action |
|---|---|
| 26/03/2013 | Prior evaluation and 1^{st} application |
| 05/04/2013 | Evaluation 10DA1A and 2^{nd} application |
| 12/04/2013 | Evaluation 7DA2A |
| 19/04/2013 | Evaluation 14DA2A |

According to protocol guidelines, the test started when the conditions suitable for the onset and development of the disease set in. Therefore, the first application of the experimental product was performed when the crop was in a stage between the start of flowering to the start of ripening. After ten days, the second application was carried out, the crop being in a stage between full flowering to the first fruits starting to acquire typical varietal color. Two more evaluations were carried out seven and fourteen days after the second application.

### Results

### 1.- Plant response to biotic stress caused by pathogen

As a response to a type of biotic stress caused by *Phytophthora cactorum* the application of SVL-195 shows the following results.

### 1.1.- Percentage of leaves attacked per plot

The mean percentages of leaves attacked per plot are shown below.

**Table 19- Mean percentages of leaves attacked by Phytophthora cactorum per plot in strawberry plants for each of the different tested products**

| | PRIOR EV. | 7DA1A | 7DA2A | 14DA2A |
|---|---|---|---|---|
| T1-Control | 0.00 a | 3.90 a | 7.11 a | 10.50 a |
| T2-SVL-195 (200 ml/hl) | 0.00 a | 3.40 a | 6.22 a | 9.24 a |
| T3-SVL-195 (300 ml/hl) | 0.00 a | 2.80 a | 4.52 a | 7.40 a |
| T4-SVL-195 (400 ml/hl) | 0.00 a | 1.95 a | 3.08 a | 5.48 a |
| T5-Standard plant strengthener (3.5 kg/ha) | 0.00 a | 3.05 a | 4.81 a | 7.60 a |

Figure 12 depicts these results. With respect to the statistical analysis, statistically significant differences between the treatments and the control were not observed.

Table 20 shows the percentages of reduction of attack with respect to the control.

**Table 20- Percentages of reduction of attack by Phytophthora cactorum per plot in strawberry plants for each of the different tested products with respect to the control (percentages of leaves attacked)**

| | 7DA1A | 7DA2A | 14DA2A |
|---|---|---|---|
| T2-SVL-195 | 12.82 | 12.52 | 12.05 |
| (200 ml/hl) | | | |
| T3-SVL-195 (300 ml/hl) | 28.21 | 36.43 | 29.52 |
| T4-SVL-195 (400 ml/hl) | 50.00 | 56.68 | 47.81 |
| T5-Standard plant strengthener (3.5 kg/ha) | 21.79 | 32.35 | 27.62 |

Figure 13 depicts these results. After the first application, SVL-195 at a dose of 300 ml/100 I was slightly above the standard. SVL-195 at a dose of 400 ml/100 l obtained the best response to the pathogen. These results remained consistent seven days after the second application.

### 1.2.- Number of plants attacked per plot

The table with the mean number of plants attacked per plot is shown below.

**Table 21 - Number of plants attacked by Phytophthora cactorum per plot in strawberry plants for each of the different tested products**

| | PRIOR EV. | 7DA1A | 7DA2A | 14DA2A |
|---|---|---|---|---|
| T1-Control | 0.00 a | 3.50 a | 8.50 a | 12.25 a |
| T2-SVL-195 (200 ml/hl) | 0.00 a | 4.25 a | 7.75 a | 9.75 a |
| T3-SVL-195 (300 ml/hl) | 0.00 a | 2.75 a | 6.25 a | 7.50 a |
| T4-SVL-195 (400 ml/hl) | 0.00 a | 2.75 a | 6.00 a | 7.50 a |
| T5-Standard plant strengthener (3.5 kg/ha) | 0.00 a | 4.50 a | 7.00 a | 9.00 a |

Figure 14 depicts these results. Statistically significant differences between the treatments and the control were not observed for this parameter. In the last evaluation carried out, it was observed that treatments with SVL-195 at the doses of 300 ml/100 l and 400 ml/100 l contained a greater increase of the plants attacked than the standard.

Table 22 shows the percentages of reduction of attack with respect to the control.

**Table 22 - Percentages of reduction of attack by Phytophthora cactorum per plot in strawberry plants for each of the different tested products with respect to the control (percentages of number of plants attacked)**

| | 7DA1A | 7DA2A | 14DA2A |
|---|---|---|---|
| T2-SVL-195 (200 ml/hl) | -17.65 | 9.68 | 25.64 |
| T3-SVL-195 (300 ml/hl) | 21.43 | 26.47 | 38.78 |
| T4-SVL-195 (400 ml/hl) | 21.43 | 29.41 | 38.78 |
| T5-Standard plant strengthener (3.5 kg/ha) | -28.57 | 17.65 | 26.53 |

Figure 15 depicts these results. It was observed that as the number of plants attacked in the control increased, and due to the effect of disease containment carried out by the different treatments, the difference with respect to the control increased, giving rise to greater values as the days went by. The greatest difference between the control and treated plots was obtained with the treatments with SVL-195 at the doses of 300 ml/100 l and 400 ml/100 l.

### 2.- Crop response to abiotic stress

### 2.1 Vigor

The mean percentages of vigor per plot for each of the treatments are shown in Table 23.

**Table 23 - Mean percentages of vigor per plot of strawberries obtained for each of the different tested products**

| | PRIOR EV. | 7DA1A | 7DA2A | 14DA2A |
|---|---|---|---|---|
| T1-Control | 62.50 a | 67.50 a | 68.75 a | 72.50 |
| T2-SVL-195 (200 ml/hl) | 70.00 a | 72.50 a | 76.25 a | 80.00 a |
| T3-SVL-195 (300 ml/hl) | 73.75 a | 75.00 a | 78.75 a | 82.50 a |
| T4-SVL-195 (400 ml/hl) | 76.25 a | 76.25 a | 80.00 a | 85.00 a |
| T5-Standard plant strengthener (3.5 kg/ha) | 72.50 a | 75.00 a | 78.75 a | 83.75 a |

Figure 16 depicts these results. There were no statistically significant differences between the different treatments and the control.

Table 24 shows the vigor results with respect to the control.

**Table 24 - Vigor showed in strawberry plants for each of the different tested products with respect to the control**

| | 7DA1A | 7DA2A | 14DA2A |
|---|---|---|---|
| T2-SVL-195 (200 ml/hl) | 7.41 | 10.91 | 10.34 |
| T3-SVL-195 (300 ml/hl) | 11.11 | 14.55 | 13.79 |
| T4-SVL-195 (400 ml/hl) | 12.96 | 16.36 | 17.24 |
| T5-Standard plant strengthener (3.5 kg/ha) | 11.11 | 14.55 | 15.52 |

Figure 17 depicts these results. The differences in vigor for the different treatments under study were not significant.

### Conclusions

As a response to a type of biotic stress - caused by *Phytophthora infestans* - the application of SVL-195 at the dose of 300 cc/hl shows results similar to those of the standard used. The application of SVL-195 at the dose of 400 cc/hl obtains a moderate effect in controlling the pathogen object of the test, causing a delay in the pathogen attack.

The application of SVL-195 at the doses of 300 cc/hl and 400 cc/hl caused damage reduction, further delaying the occurrence of the pathogen in the plants object of the test compared to the standard used.

The application of SVL-195 at the doses of 300 cc/hl and 400 cc/hl showed a slight effect on the increase of crop vigor with respect to the standard used.

### EXAMPLE 6

### Evaluation of the activity of the composition obtained in Example II for preventing or mitigating damage caused by the attack of Bremia lactucae and as a plant strengthener and stimulant in outdoor lettuce plants

This study was conducted by the company SICOP, which is officially recognized by the Spanish Agricultural Ministry as being competent in conducting Officially Recognized Testing (*Ensayos Oficialmente Reconocidos)* (EOR 50/03).

### Tested compositions

The composition of the invention obtained according to Example II was tested. A standard plant strengthening product based on *Saccharomyces cerevisiae* extracts and carboxylamines was used for the sake of comparison. This standard, and not a conventional plant protection product, was chosen because the efficacy of the composition of the invention as a product that induces defenses against stress was to be determined.

The following compositions were thus tested:
- SVL-195 Composition
- Standard plant strengthening product

### Crop

Crop: Lettuce
Botanical name: *Lactuca sativa*
Order: Asterales
Family: Asteraceae
Subfamily: Cichorioideae
Genus: *Lactuca*
Species: *L. sativa*
Variety: Chiquina
Sowing date: 21/09/2012
Planting density: 6.73 plants/m². Spacing between plants: 0.45 x 0.33 m
Type of irrigation: Irrigation by means of exudation tube
Cultivation system: Outdoors
Planting system: Sowing in seedbed and later transplanted to field

### Materials and methods

### Conditions of the study

The test design was by means of randomly distributed plots. Four repetitions were conducted for each theory contained in the protocol, the control being included in the testing plots. The test was thus established in 20 independent plots each with a 9 m² surface area. Each of the plots consisted of 2 lines with plants located every 33 cm. The test was conducted in an outdoor plot with a 1.48 ha surface area. Crop orientation was North-South
Soil: Loamy-clayey.
Irrigations: First post-transplant irrigation and the crop was then irrigated according to its water needs
Work: Manual weeding to remove weeds.
Fertilization: Inputs of N, P and K and micronutrients by means of foliar fertilization.
Maintenance: Maintenance treatments were not performed in the testing plot.

**Tested treatments**

| | Product | Dose |
|---|---|---|
| Control 1 (T1) | - | - |
| Control 2 (T2) | SVL-195 | 200 ml/100 I |
| Control 3 (T3) | SVL-195 | 300 ml/100 I |
| Control 4 (T4) | SVL-195 | 400 ml/100 I |
| Control 5 (T5) | Standard plant strengthening product | 300 g/100 I |

### Applications

A total of 2 foliar applications were performed. The same machinery was used in all the applications, a MARUYAMA motorized backpack sprayer with a working pressure of 5 atmospheres.

The broth volume used in the two applications was 600 l/ha.

### Application methodology

As established in the protocol, the evaluated parameters were:
1 - Evaluation of crop response to biotic stress. In this case, crop response to the pathogen *Bremia lactucae* was evaluated:
   Evaluation of the severity, evaluating the number of infected plants.
2 - Evaluation on the effect of inducing resistance to abiotic stress. The effects of the product on crop vegetation:
   Vigor of the testing plots using the best plot contained in the test as 100%.

### Conducting the test

A planning that described the actions to be performed at all times according to protocol was established at the start of the test:

| Date | Action |
|---|---|
| 26/11/2012 | Prior evaluation and 1^{st} application |
| 06/12/2012 | Evaluation 10DA1A and 2^{nd} application |
| 13/12/2012 | Evaluation 7DA2A |
| 20/12/2012 | Evaluation 14DA2A |

According to protocol guidelines, the test started with the first application, after which an evaluation was conducted. The crop was in state 42-43 on the BBCH scale (20-30% of the expected size for the head). After the evaluation conducted ten days following the first application, the second application was carried out; the crop was between states 43-44 on the BBCH scale (30-40% of the expected size for the head). Two evaluations were carried out following the second application performed after seven and fourteen days.

### Results

### 1.- Plant response to the biotic stress caused by the pathogen

As a response to a type of biotic stress - caused by *Bremia lactucae -* the response to the different doses of the composition of the invention was evaluated by studying the influence on the crop.

### 1.1.- Number of plants infected per plot

The number of plants infected per plot is shown below.

**Table 25 - Mean number of plants infected by Bremia lactucae per plot in lettuce plants for each of the different tested products**

| | PRIOR EV. | 7DA1A | 7DA2A | 14DA2A |
|---|---|---|---|---|
| T1-Control | 0.50 a | 2.75 a | 4.25 a | 8.00 a |
| T2-SVL-195 (200 ml/hl) | 0.50 a | 2.00 a | 3.75 a | 7.25 a |
| T3-SVL-195 (300 ml/hl) | 0.50 a | 1.50 a | 2.75 a | 5.25 a |
| T4-SVL-195 (400 ml/hl) | 0.50 a | 1.50 a | 2.50 a | 5.00 a |
| T5-Standard plant strengthener (3.5 kg/ha) | 0.50 a | 1.75 a | 2.75 a | 5.25 a |

Figure 18 depicts these results. With respect to the statistical analysis, statistically significant differences between the treatments and the control were not observed.

Table 26 shows the percentages of reduction of attack with respect to the control.

**Table 26 - Percentages of reduction of attack by Bremia lactucae per plot in lettuce plants for each of the different tested products with respect to the control (no. of infected plants)**

| | 7DA1A | 7DA2A | 14DA2A |
|---|---|---|---|
| T2-SVL-195 (200 ml/hl) | 27.27 | 11.76 | 9.38 |
| T3-SVL-195 (300 ml/hl) | 45.45 | 35.29 | 34.38 |
| T4-SVL-195 (400 ml/hl) | 45.45 | 41.18 | 37.50 |
| T5-Standard plant strengthener (3.5 kg/ha) | 36.36 | 35.29 | 34.38 |

Figure 19 depicts these results. The plots where the composition of the invention SVL-195 at the dose of 4 ml/l was applied showed greater resistance to disease development. It is followed by the composition at the dose of 3 ml/l and the standard behaved along the same line.

### 2.- Crop response to abiotic stress

### 2.1 Vigor

The vigor shown in the plots by the different treatments was evaluated to enable establishing if the different product dosages show an apparent difference with respect to one another and at the same time with respect to the standard.

The mean percentages of vigor per plot for each of the treatments are shown in Table 27.

**Table 27 - Mean percentages of vigor per plot of lettuce plants obtained for each of the different tested products**

| | 10DA1A | 7DA2A | 14DA2A |
|---|---|---|---|
| T1-Control | 87.50 a | 85.00 a | 86.25 a |
| T2-SVL-195 (200 ml/hl) | 88.75 a | 91.25 a | 92.50 a |
| T3-SVL-195 (300 ml/hl) | 90.00 a | 92.50 a | 93.75 a |
| T4-SVL-195 (400 ml/hl) | 91.25 a | 92.50 a | 93.75 a |
| T5-Standard plant strengthener (3.5 kg/ha) | 91.25 a | 92.50 a | 93.75 a |

knob

Figure 20 depicts these results. There were no statistically significant differences between the different treatments and the control.

As seen in the table, the application of SVL-195 involved a slight increase in crop vigor with respect to the control, significant differences between the different treatments not being observed.

### Conclusions

As a response to a type of biotic stress - caused by *Bremia lactucae -* the application of SVL-195 at the doses of 3 and 4 ml/l shows a moderate effect against the pathogen, delaying the onset of the symptoms of the disease in the treated plants. The dose of 4 ml/l obtains the best results exceeding the standard.

The application of SVL-195 showed a slight effect on the increase in crop vigor in relation to the control. The reference product used behaved in a manner similar to the treatments with SVL-195.

### EXAMPLE 7

### Evaluation of the activity of the composition obtained in Example II for preventing or mitigating damage caused by the attack of Peronospora destructor and Puccinia allii, and as a plant strengthener and stimulant in outdoor garlic plants

This study was conducted by the company SICOP, which is officially recognized by the Spanish Agricultural Ministry as being competent in conducting Officially Recognized Testing (*Ensayos Oficialmente Reconocidos*) (EOR 50/03).

### Tested compositions

The composition of the invention obtained according to Example II was tested. A standard plant strengthening product based on *Saccharomyces cerevisiae* extracts and carboxylamines was used for the sake of comparison. This standard, and not a conventional plant protection product, was chosen because the efficacy of the composition of the invention as a product that induces defenses against stress was to be determined.

The following compositions were thus tested:
- SVL-195 composition
- Standard plant strengthening product

### Crop

Crop: Garlic
Botanical name: *Allium sativum*
Order: Asparagales
Family: Amaryllidaceae
Subfamily: Allioideae
Genus: *Allium*
Species: *A. sativum*
Variety: Chinese violet garlic
Sowing date: 02.09.12
Planting density: 170 g/m². Spacing between plants: 0.5 x 0.1 m
Type of irrigation: Furrow irrigation
Cultivation system: Outdoors
Planting system: Direct sowing

### Materials and methods

### Conditions of the study

The test design was by means of randomly distributed plots. Four repetitions were conducted for each theory contained in the protocol, the control being included in the testing plots. The test was thus established in 20 independent plots each with a 12 m² surface area. The test was conducted in an outdoor plot with a 1.2 ha surface area. Crop orientation was East-West.

The irrigation system used is furrow irrigation.
Soil: Loamy-sandy clay
Irrigations: Furrow irrigations. According to crop water needs.
Work: Preparing terrain for sowing. Spraying herbicide.
Fertilization: Inputs of 26% ammonium nitrosulfate on 04/03/13
Maintenance: Maintenance treatments were not performed in testing plots.

**Tested treatments**

| | Product | Dose |
|---|---|---|
| Control 1 (T1) | - | - |
| Control 2 (T2) | SVL-195 | 200 ml/100 l |
| Control 3 (T3) | SVL-195 | 300 ml/100 l |
| Control 4 (T4) | SVL-195 | 400 ml/100 l |
| Control 5 (T5) | Standard plant strengthening product | 300 g/100 l |

### Applications

A total of 3 foliar applications were performed. The same machinery was used in all the applications, a MARUYAMA motorized backpack sprayer with a working pressure of 5 atmospheres.

The broth volume used was 350 l/ha in the first application, 360 l/ha in the second application and 365 l/ha in the third application.

### Application methodology

As established in the protocol, the evaluated parameters were:
1.- Evaluation on the effect of inducing resistance to abiotic stress. The effects of the product on crop vegetation:
- Biomass
- Vigor
- Resistance to cold weather

2.- Evaluation of crop response to biotic stress. In this case, crop response to the pressure caused by *Peronospora destructorwas* evaluated:
- Plot evaluation. Slightly infected crop: evaluating the % of leaf affected area of the entire plot. A scale (from 0 to 10; 0 being without infection, 10 being completely infected foliage or dead foliage) can be used:
0: No attack

- Evaluation of the affected leaves:

| | |
|---|---|
| 1: without infection | |
| 2: 1-3 spots/leaf | 1 to 10% |
| 3: 4-10 spots/leaf | 11 to 30% |
| 4: 11-25 spots/leaf | 31 to 50% |
| 5: 26-50 spots/leaf | 51 to 80% |
| 6: > 50 spots/leaf | 81 to 100% |

Sample size:
- 25 leaves per plot
- Entire plot

### Depending on the evaluation conducted

### Conducting the test

A planning that described the actions to be performed at all times according to protocol was established at the start of the test:

| **Date** | **Action** |
|---|---|
| 21/02/2013 | Prior evaluation and 1 st application |
| 25/02/2013 | Evaluation 3DA2A |
| 04/03/2013 | Evaluation 7DA1A and 2nd application |
| 07/03/2013 | Evaluation 3DA2A |
| 15/03/2013 | Evaluation 7DA2A and 3^{rd} application |
| 18/03/2013 | Evaluation 3DA3A |
| 25/03/2013 | Evaluation 7DA3A |
| 01/04/2013 | Evaluation 14DA3A |
| 08/04/2013 | Evaluation 21 DA3A |

The test was established in Vega de Granada, this being an area where garlic cultivation is common and attack by *Peronospora destructor* (Mildew) tends to occur naturally.

According to protocol guidelines, the test started in a preventive manner when the crop was between states 14 to 15 on the BBCH scale (4 to 5 leaves). The second application was performed after 7 days and the third application was performed after 14 days, the crop being between states 14 to 17 on the BBCH scale (4 to 7 leaves).

The pressure caused by the disease was low throughout the entire test, increasing at the end of the test.

The conditions at the end of the test were favorable for the occurrence of rust (*Puccinia allii*) attack.

### Results

### 1.- Plant response to biotic stress caused by the pathogen Peronospora destructor

The evolution of crop response in percentage of leaf mass attacked per plot is shown below in Table 28.

**Table 28 - Percentage of leaf mass affected by Peronospora destructor of the entire plot in garlic plants for each of the different tested products**

| | PRIOR | 3DA2A | 7DA1A | 3DA2A | 7DA2A | 3DA3A | 7DA3A | 14DA3A | 21DA3A |
|---|---|---|---|---|---|---|---|---|---|
| T1 | 1.00 a | 1.00 a | 1.00 a | 1.00 a | 1.00 a | 1.00 a | 1.00 a | 1.00 a | 7.50 a |
| T2 | 0.75 a | 1.00 a | 1.00 a | 1.00 a | 1.00 a | 1.00 a | 1.00 a | 1.00 a | 2.00 b |
| T3 | 1.00 a | 1.00 a | 1.00 a | 1.00 a | 1.00 a | 1.00 a | 1.00 a | 1.00 a | 1.00 b |
| T4 | 1.00 a | 1.00 a | 1.00 a | 1.00 a | 1.00 a | 1.00 a | 1.00 a | 1.00 a | 1.00 b |
| T5 | 1.00 a | 1.00 a | 1.00 a | 1.00 a | 1.00 a | 1.00 a | 1.00 a | 1.00 a | 2.00 b |

Figure 21 depicts these results. There were statistically significant differences in the last evaluation between the treatments and the control.

The evaluation of 25 leaves per plot with the scale proposed in the protocol is shown below in Table 29.

**Table 29 - Percentage of leaf mass attacked by Peronospora destructor in 25 leaves per plot in garlic plants for each of the different tested products**

| | PRIOR | 3DA2A | 7DA1A | 3DA2A | 7DA2A | 3DA3A | 7DA3A | 14DA3A | 21DA3A |
|---|---|---|---|---|---|---|---|---|---|
| T1 | 1.15 a | 1.16 a | 1.25 a | 1.29 a | 1.32 a | 1.36 a | 1.41 a | 1.49 a | 1.73 a |
| T2 | 1.17 a | 1.14 ab | 1.20 b | 1.20 b | 1.22 b | 1.19 b | 1.19 b | 1.23 b | 1.40 b |
| T3 | 1.16 a | 1.10 ab | 1.13 c | 1.13 c | 1.15 c | 1.15 b | 1.16 bc | 1.17 c | 1.27 bc |
| T4 | 1.13 a | 1.11 ab | 1.11 c | 1.11 c | 1.14 c | 1.12 b | 1.13 c | 1.14 c | 1.23 c |
| T5 | 1.10 a | 1.09 b | 1.10 c | 1.10 c | 1.12 c | 1.12 b | 1.15 bc | 1.18 c | 1.31 c |

There were statistically significant differences between the control and T5 (standard) 3DA2A. There were no differences between the control and the remaining treatments, nor were there any differences between treatments in this evaluation.

There were statistically significant differences between the control and the remaining treatments and between T2 (SVL-195 a 2 cc/l) and the remaining treatments 7DA1A, 3DA2A and 7DA2A.

There were statistically significant differences between all the treatments and the control 3DA3A.

There were statistically significant differences between all the treatments and the control 7DA3A; in turn these differences were also observed between T4 (SVL-195 at 4 cc/l) with respect to the control and T2 (SVL-195 at 2cc/l).

There were statistically significant differences between the control and the remaining treatments and between T2 (SVL-195 a 2 cc/l) and the remaining treatments 14DA3A.

There were statistically significant differences between the control and the remaining treatments 21 DA3A, which differences were also observed between T2 (SVL-195 at 2cc/l) with respect to T4 (SVL-195 at 4 cc/l) and T5 (standard).

Table 30 shows the preceding results translated into the percentage of leaf damage.

**Table 30 - Percentage of leaf damage when attacked by Peronospora destructor in 25 leaves per plot in garlic plants for each of the different tested products**

| | PRIOR | 3DA2A | 7DA1A | 3DA2A | 7DA2A | 3DA3A | 7DA3A | 14DA3A | 21DA3A |
|---|---|---|---|---|---|---|---|---|---|
| T1 | 11.50 | 11.60 | 12.50 | 12.90 | 13.20 | 13.60 | 14.10 | 14.90 | 17.30 |
| T2 | 11.70 | 11.40 | 12.00 | 12.00 | 12.20 | 11.90 | 11.90 | 12.30 | 14.00 |
| T3 | 11.60 | 11.00 | 11.30 | 11.30 | 11.50 | 11.50 | 11.60 | 11.70 | 12.70 |
| T4 | 11.30 | 11.11 | 11.11 | 11.11 | 11.41 | 11.20 | 11.31 | 11.41 | 12.32 |
| T5 | 11.00 | 10.90 | 11.00 | 11.00 | 11.20 | 11.20 | 11.50 | 11.80 | 13.10 |

Figure 22 depicts these results. SVL-195 obtained the best response to the pathogen. A dose effect was produced; the dosage of 300 cc/hl seems to be the most suitable. Plant response to this biotic stress is thought to be caused by increased vigor of the plots treated with SVL-195.

In addition to this biotic stress, another biotic stress which was garlic rust (*Puccinia allii*) was produced by the temperature and damp conditions.

### 2.- Plant response to biotic stress caused by the pathogen Puccinia allii

Table 31 shows the mean percentages of attack per plot

**Table 31 - Mean percentage of attack by Puccinia allii per plot in garlic plants for each of the different tested products**

| | 21DA3A |
|---|---|
| T1 | 12.50 a |
| T2 | 5.00 b |
| T3 | 3.50 bc |
| T4 | 2.50 c |
| T5 | 4.00 bc |

Figure 23 shows these results. Twenty-one days after the 3rd application, crop response to the rust attack was very good with respect to the control (a). It seems to prevent the disease, causing the plant to respond to the pressure caused by the pathogen, creating a defense mechanism since the attack in treated plots is much lower. A dose effect also occurred. This was corroborated by the statistical analysis of the data, in which there were differences between the dose of 2 cc/l with respect to the doses of 3 cc/l and 4 cc/l of SVL-195.

Like with mildew, it is thought that the improved defense of the crop against biotic stresses is a result of its increased vigor, which makes it more tolerant to adverse factors that arise throughout cultivation.

### 3.- Plant response to abiotic stress

### 2.1.- Vigor

A considerable difference in the vigor started to be observed after the 3^{rd} application.

The mean percentages of vigor per plot for each of the treatments are shown in Table 32.

**Table 32 - Mean percentages of vigor per plot of garlic plants obtained for each of the different tested products**

| | 3DA3A | 7DA3A | 14DA3A | 21DA3A |
|---|---|---|---|---|
| T1 | 95.00 b | 91.25 b | 91.25 b | 90.00 c |
| T2 | 100.00 a | 98.50 a | 98.00 a | 98.00 b |
| T3 | 100.00 a | 100.00 a | 100.00 a | 100.00 a |
| T4 | 100.00 a | 100.00 a | 100.00 a | 100.00 a |
| T5 | 100.00 a | 99.00 a | 99.00 a | 98.50 b |

Figure 24 depicts these results. There were statistically significant differences between the control and the remaining treatments 3DA3A, 7DA3A, 14DA3A and 14DA3A.

Statistically significant differences between the control and the remaining treatments were observed 21 DA3A, among which treatments differences between the doses of 3 cc/l and 4 cc/l of SVL-195 and the remaining treatments were in turn observed.

The SVL-195 dosage of 2 cc/l behaves in a manner very similar to the standard. In contrast, the dosages of 3 and 4 cc/l obtain increased vigor.

### Conclusions

Crop vigor in plots treated with SVL-195 at the doses of 3 and 4 cc/l is greater than the others and exceeds the reference product.

As a response to biotic stress caused by *Peronospora destructor,* the crop is more resistant to the pathogen attack. The doses of 3 and 4 cc/l prevent the disease from progressing so plant defense against the pathogen is produced.

The response to *Puccinia allii* 21 days after the third application indicates the defense induced by the treatment in the crop; dose effect is also observed.

The physiological response of increased vigor induced by SVL-195 causes the crop to respond better to biotic factors and to therefore be healthier.

The dose of SVL-195 to be used which is considered the most suitable in view of the results obtained in the response to both biotic and abiotic factors is 3 and 4 cc/l.

### EXAMPLE 8

### Evaluation of the activity of the composition obtained in Example II for preventing or mitigating damage caused by the attack of Phytophthora infestans and as a strengthener and stimulant in outdoor potato plants

This study was conducted by the company SICOP, which is officially recognized by the Spanish Agricultural Ministry as being competent in conducting Officially Recognized Testing (*Ensayos Oficialmente Reconocidos*) (EOR 50/03).

### Tested compositions

The composition of the invention obtained according to Example II was tested. A standard plant strengthening product based on *Saccharomyces cerevisiae* extracts and carboxylamines was used for the sake of comparison. This standard, and not a conventional plant protection product, was chosen because the efficacy of the composition of the invention as a product that induces defenses against stress was to be determined.

The following compositions were thus tested:
- SVL-195 composition
- Standard plant strengthening product

### Crop

Crop: Potato
Botanical name: *Solanum tuberosum*
Order: Solanales
Family: Solanaceae
Subfamily: Solanoideae
Genus: *Solanum*
Species: S. *tuberosum*
Variety: Universa
Sowing date: 24/11/2012
Planting density: 10.1 plants/m². Spacing between plants: 0.66 x 0.15 m
Type of irrigation: Furrow irrigation
Cultivation system: Outdoor

### Materials and methods

### Conditions of the study

The test design was by means of randomly distributed plots. Four repetitions were conducted for each theory contained in the protocol, the control being included in the testing plots. The test was thus established in 20 independent plots each with a 16 m² surface area. Each of the plots consisted of 3 lines in ridge form with plants located every 15 cm. The test was conducted in an outdoor plot with a 1 ha surface area. Crop orientation was East-West.
Soil: Loamy
Irrigations: No irrigation was performed in the entire crop cycle because constant rainfall was enough to meet crop water needs.
Work: None
Fertilization: Inputs of N, P₂O₅ and K₂O by means of leaf fertilization.
Maintenance: Two applications were performed with a standard insecticide.

**Tested treatments**

| | Product | Dose |
|---|---|---|
| Control 1 (T1) | - | - |
| Control 2 (T2) | SVL-195 | 200 ml/100 l |
| Control 3 (T3) | SVL-195 | 300 ml/100 l |
| Control 4 (T4) | SVL-195 | 400 ml/100 l |
| Control 5 (T5) | Standard plant strengthening product | 200 ml/100 l |

### Applications

A total of 2 foliar applications were performed.

The same machinery was used in all the applications, a MARUYAMA motorized backpack sprayer with a working pressure of 5 atmospheres.

The broth volume used in both applications was 780 l/ha.

### Application methodology

The following parameters were evaluated:
1.- Evaluation of crop response to biotic stress. In this case, crop response to the pathogen *Phytophthora infestans* is evaluated.
   - Evaluation of the severity, evaluating to that end the % of leaf affected.
   - Delay in the onset of the disease, evaluating to that end the % affected per plot.
2.- Evaluation on the effect of inducing resistance to abiotic stress. The effects of the product on crop vegetation:
   - Vigor of the testing plots using the best plot contained in the test as 100%.
   - Evaluation of the harvest, for which the central line of the plot was evaluated, obtaining crop output in t/ha.

### Conducting the test

A planning that described the actions to be performed at all times according to protocol was established at the start of the test:

| **Date** | **Action** |
|---|---|
| 07/03/2013 | Prior evaluation and 1^{st} application (1A) |
| 14/03/2013 | Evaluation 7DA1A and 2^{nd} application (2A) |
| 21/03/2013 | Evaluation 7DA2A |
| 28/03/2013 | Evaluation 14DA2A |
| 16/04/2013 | Evaluation of the harvest |

According to protocol guidelines, the test started with the first application, after which an evaluation was conducted. The crop was between states 35-37 on the BBCH scale (50-70% of the plants touching one another between the rows). After the evaluation conducted seven days after the first application, the second application was carried out; the crop was in state 36-39 on the BBCH scale (60-90% of the plants touching one another between the rows). Following the second application, an evaluation was conducted after seven days, where the first symptoms of pathogen attack started to be seen. Fourteen days after the second application the last evaluation was conducted for the parameters described for the *Phytophthora infestans* attack. The evaluation of the harvest was carried out on April 16 coinciding with the day the farmer harvested the rest of the farm.

### Results

### 1.- Crop response to biotic stress caused by pathogen

As a response to a type of biotic stress - caused by *Phytophthora infestans* - the response to the different doses of SVL-195 was evaluated by studying the influence on the crop.

### 1.1.- Percentage of affected leaf surface of the entire plot

The percentages of attack per plot are shown below according to the suitable scale.

**Table 33 - Mean percentages of leaf surface attacked by Phytophthora infestans of the entire plot in potato plants for each of the different tested products**

| | PRIOR EV. | 7DA1A | 7DA2A | 14DA2A |
|---|---|---|---|---|
| T1-Control | 0.00 a | 0.00 a | 12.58 a | 21.45 a |
| T2-SVL-195 (200 ml/hl) | 0.00 a | 0.00 a | 12.21 a | 18.72 a |
| T3-SVL-195 (300 ml/hl) | 0.00 a | 0.00 a | 6.78 a | 14.12 a |
| T4-SVL-195 (400 ml/hl) | 0.00 a | 0.00 a | 5.53 a | 12.54 a |
| T5- Standard plant strengthening product (200-300 g/hl) | 0.00 a | 0.00 a | 5.70 a | 14.11 a |

Figure 25 depicts these results. With respect to the statistical analysis, statistically significant differences between the treatments and the control were not observed.

Table 34 shows the percentages of reduction of attack with respect to the control.

**Table 34 - Percentages of reduction of leaf surface attacked by Phytophthora infestans per plot in potato plants for each of the different tested products with respect to the control**

| | 7DA1A | 7DA2A | 14DA2A |
|---|---|---|---|
| T2-SVL-195 (200 ml/hl) | 0 | 2.90 | 12.73 |
| T3-SVL-195 (300 ml/hl) | 0 | 46.12 | 34.18 |
| T4-SVL-195 (400 ml/hl) | 0 | 56.06 | 41.52 |
| T5- Standard plant strengthening product (200-300 g/hl) | 0 | 54.67 | 34.20 |

Figure 26 depicts these results. As can be seen, treatment with SVL-195 at the dose of 4 cc/hl is similar to the standard, being slightly greater 14 days after the second application.

### 1.2.- Mean percentage of plot affected

Table 35 shows the mean percentage of plot affected by the pathogen, in which the delay in the onset of the disease can be seen.

**Table 35 - Mean percentage of plot attacked by Phytophthora infestans per plot in potato plants for each of the different tested products**

| | PRIOR EV. | 7DA1A | 7DA2A | 14DA2A |
|---|---|---|---|---|
| T1-Control | 0.00 a | 0.00 a | 36.25 a | 53.75 a |
| T2-SVL-195 (200 ml/hl) | 0.00 a | 0.00 a | 30.00 ab | 51.25 a |
| T3-SVL-195 (300 ml/hl) | 0.00 a | 0.00 a | 23.75 ab | 38.75 a |
| T4-SVL-195 (400 ml/hl) | 0.00 a | 0.00 a | 12.50 b | 25.00 a |
| T5- Standard plant strengthening product (200-300 g/hl) | 0.00 a | 0.00 a | 12.50 b | 26.25 a |

Figure 27 depicts these results. With respect to the statistical analysis, statistically significant differences were observed seven days after the second application between treatment T4 (SVL-195 4 cc/l) and treatment T5 (standard 3 g/l) with respect to the control. Treatments T2 (SVL-195 2 cc/l) and T3 (SVL-195 3 cc/l) had no significant differences with respect to the remaining treatments or the control.

Table 36 shows the percentages of reduction of attack with respect to the control.

**Table 36 - Percentages of reduction of mean percentage of plot attacked by Phytophthora infestans per plot in potato plants for each of the different tested products with respect to the control**

| | 7DA1A | 7DA2A | 14DA2A |
|---|---|---|---|
| T2-SVL-195 (200 ml/hl) | 0.00 | 17.24 | 4.65 |
| T3-SVL-195 (300 ml/hl) | 0.00 | 34.48 | 27.91 |
| T4-SVL-195 (400 ml/hl) | 0.00 | 65.52 | 53.49 |
| T5- Standard plant strengthening product (200-300 g/hl) | 0.00 | 65.52 | 51.16 |

As can be seen, treatment with SVL-195 at the dose of 4 cc/hl is similar to the standard in both evaluations.

### 2.- Crop response to abiotic stress

### 2.1.- Vigor

The vigor showed in the plots by the different treatments was evaluated to enable establishing if different product dosages show an apparent difference with respect to one another and at the same time with respect to the standard.

Table 37 shows the mean percentages of vigor per plot for each of the tested treatments.

**Table 37 - Mean percentages of vigor per plot of potato plants obtained for each of the different tested products**

| | PRIOR EV. | 7DA1A | 7DA2A | 14DA2A |
|---|---|---|---|---|
| T1-Control | 0.00 a | 81.25 a | 71.25 a | 70.00 a |
| T2-SVL-195 (200 ml/hl) | 0.00 a | 85.00 a | 75.00 a | 75.00 a |
| T3-SVL-195 (300 ml/hl) | 0.00 a | 86.25 a | 77.50 a | 77.50 a |
| T4-SVL-195 (400 ml/hl) | 0.00 a | 86.25 a | 77.50 a | 77.50 a |
| T5- Standard plant strengthening product (200-300 g/hl) | 0.00 a | 86.25 a | 77.50 a | 77.50 a |

Figure 28 depicts these results. With respect to the statistical analysis, statistically significant differences between the treatments and the control were not observed.

Differences between the different treatments were minimal.

### 2.2.- Harvest

In the evaluation of the harvest, harvesting was performed from the central line of each plot to enable knowing the increase in harvest produced by the different treatments. It was expressed in tons per hectare as this is the most commonly used parameter for expressing crop outputs. Table 38 shows the crop output obtained for each of the treatments.

**Table 38- Potato crop output in tons per hectare obtained for each of the different tested products**

| | t/ha |
|---|---|
| T1-Control | 28.12 a |
| T2-SVL-195 (200 ml/hl) | 30.04 a |
| T3-SVL-195 (300 ml/hl) | 30.09 a |
| T4-SVL-195 (400 ml/hl) | 35.12 a |
| T5- Standard plant strengthening product (200-300 g/hl) | 32.67 a |

Figure 29 depicts these results. With respect to the statistical analysis, statistically significant differences between the treatments and the control were not observed.

As can be seen, plots treated with SVL-195 at the dose of 4 cc/l obtained the best results, reaching a crop output that is slightly greater than the plots treated with the standard.

### Conclusions

As a response to a type of biotic stress - caused by *Phytophthora infestans* - the application of SVL-195 at the dose of 400 cc/hl shows a moderate effect against the pathogen, obtaining a result similar to the standard used.

The application of SVL-195 at the doses of 300 cc/hl and 400 cc/hl showed a slight effect on the increase in crop vigor in relation to the control. The dose of SVL-195 at 200 cc/hl showed less vigor with respect to higher doses. The standard behaved in a manner similar to treatments with SVL-195 at the doses of 300 cc/hl and 400 cc/hl.

In terms of the increase in the crop output obtained with respect to the control, the application of SVL-195 at the dose of 400 cc/hl obtained the highest crop output, exceeding the standard used.

## Claims

1. Composition for agricultural use **characterized in that** it comprises an active ingredient consisting of a quebracho extract, a mimosa extract or a combination thereof.

2. Composition according to claim 1, **characterized in that** it comprises an active ingredient consisting of a quebracho extract.

3. Composition according to claim 1, **characterized in that** it comprises an active ingredient consisting of a mimosa extract.

4. Composition according to claim 1, **characterized in that** it comprises an active ingredient consisting of a mixture of a mimosa extract and a quebracho extract.

5. Composition according to claim 1, **characterized in that** it comprises 1-30% by weight of active ingredient with respect to the total weight of the composition.

6. Composition according to claim 1, **characterized in that** it comprises a sorbic acid salt.

7. Composition according to claim 6, **characterized in that** it comprises 1-20% by weight of sorbic acid salt with respect to the total weight of the composition.

8. Composition according to claim 1, **characterized in that** it comprises a nutrient selected from ammoniacal nitrogen, sulfur and a mixture thereof.

9. Composition according to claim 8, **characterized in that** it comprises ammonium thiosulfate.

10. Method for the preparation of the composition for agricultural use of claim 1, **characterized in that** the steps of:
(a) obtaining a soluble mimosa extract, quebracho extract or a combination thereof; and
(b) dissolving the soluble extract obtained in (a) in a solvent selected from water, a diol or triol alcohol with 1 to 4 carbon atoms, and mixtures thereof.

11. Method according to claim 10, **characterized in that** it comprises an additional step in which a sorbic acid salt is added.

12. Method for inducing a response to biotic stress in plants fit to be cultivated, **characterized in that** it comprises applying the composition for agricultural use of claims 1-9 to such plants by means of foliar spraying.

13. Method according to claim 12 for preventing or reducing damage caused by fungi and/or oomycetes.

14. Method according to claim 13 for preventing or reducing damage caused by oidium and/or rust.

15. Method according to claim 13 for preventing or reducing damage caused by mildew.
